# EUROPEAN PATENT APPLICATION

(11) **EP 4 663 554 A1**
(43) Date of publication of application: **17.12.2025**
(21) Application number: 23921010.7
(22) Date of filing: 06.02.2023
(51) Int. Cl.: B64G 1/10, B64G 1/24, G06Q 50/00

(54) **PROCESSING DEVICE AND COMPUTER PROGRAM USED IN CONJUNCTION WITH SPACECRAFT**

(71) Applicant: Institute for Q-shu Pioneers of Space, Inc., Fukuoka-shi Fukuoka 8100001 (JP)
(72) Inventor: TANAKA, Shuichi, Fukuoka-shi, Fukuoka 810-0001 (JP); WATANABE, Noe, Fukuoka-shi, Fukuoka 810-0001 (JP); YAMAGUCHI, Yuuki, Fukuoka-shi, Fukuoka 810-0001 (JP); SAKIB, Shadman, Fukuoka-shi, Fukuoka 810-0001 (JP)
(74) Representative: Plougmann Vingtoft a/s
(86) International application number: PCT/JP2023/003817
(87) International publication number: WO 2024/166173

(57) **Abstract**

To provide a processing device and a computer program that more smoothly provide an image and/or image data to a user who desires imaging by a spacecraft.

A processing device according to one embodiment is "a processing device including at least one processor used in connection with a spacecraft that images the earth, and the at least one processor is configured to: from a terminal device of a user, receive an order condition including coordinates of a point to be imaged or the coordinates and a date and time to image the point; transmit a determination result indicating whether or not the imaging by the spacecraft based on the order condition is possible to the terminal device of the user; and transmit at least one candidate condition including a candidate date and time when the imaging of the point is possible to the terminal device of the user in a case where the determination result indicates that the imaging by the spacecraft based on the order condition is possible".

## Description

### Technical Field

The technology disclosed in the present application generally relates to a processing device and a computer program used in conjunction to a spacecraft, and relates to, for example, an imaging instruction for the spacecraft that images the earth and the processing device (sometimes referred to as a "tasking system") that provides a user with image data and/or an image obtained by the spacecraft in response to the imaging instruction. For example, the technology disclosed in the present application relates to the processing device (tasking system) that determines an imaging request on the basis of a point desired by the user to observe by a synthetic aperture radar (SAR), and provides the user with image data (SAR image data) obtained by imaging the point using the SAR by the spacecraft and/or an SAR image generated on the basis of the SAR image data.

### Background Art

In a conventional system that provides an image (SAR image) imaged using an SAR, when there is data desired to be acquired, a user first transmits an imaging request indicating a range desired to be imaged to a company who operates a spacecraft through an agent. In a case where imaging based on such an imaging request is possible, the company accepts the imaging request and causes the spacecraft to execute imaging based on the imaging request. Furthermore, the company provides the user with image data acquired by imaging by the spacecraft or an image generated on the basis of the image data. As a result, it takes time for the user to acquire a desired image, and it is difficult for the user to acquire and utilize the desired image data or images in real time.

Examples of factors that hinder the user from acquiring the image data or images in real time include the following three factors.

As a first factor, it is very difficult for many users to determine whether or not it is possible for the spacecraft to image (observe) a point to be imaged, and furthermore, it is conceivable that companies who operate the spacecraft are also limited in terms of companies who can determine imaging conditions.

As a second factor, an operator belonging to the company that operates the spacecraft determines whether or not the imaging based on the imaging conditions included in the imaging request is possible for the imaging request received from each user. Therefore, in a case where the company receives a large number of imaging requests, it is conceivable that it takes a long time from when the user transmits the imaging request until the spacecraft executes imaging based on the imaging request.

As a third factor, due to a fixed visual field direction of an imaging device of the spacecraft on which the synthetic aperture radar is mounted and/or a limited visual field range of the imaging device, the frequency at which such an imaging device can image the point to be imaged requested by the user is small in the first place. Therefore, the imaging device may not be able to image such a point on date and time desired by the user.

To solve such a problem, the technology described in Japanese Patent No. 3658959 (Patent Literature 1) proposes use of an operation planning device that sets an operation time and an orientation direction of an imaging device at a closest distance to an observation target for which imaging is reserved on the basis of information stored in an imaging reservation database for reserving the imaging time of the observation target, and a terminal device that acquires orbit information of an artificial satellite from a satellite information database and registers the imaging time of the observation target in the imaging reservation database for reserving a passage time of the artificial satellite capable of imaging the observation target.

### Citation List

### Patent Literature

Patent Literature 1: JP 3658959 B

### Summary of Invention

### Technical Problem

However, in the technology described in Patent Literature 1, many users cannot determine whether or not the point to be imaged desired by themselves can be observed (imaged) by the spacecraft. Therefore, even in a case where the point to be imaged desired by the user is a point that cannot be observed by the spacecraft, many users can recognize the fact that the point to be imaged desired by the user is a point that cannot be observed by the spacecraft only by transmitting the imaging request specifying the point and receiving a result indicating that such imaging is impossible. As a result, many users will lose time just to recognize the above facts.

Therefore, the technology disclosed in the present application provides a processing device and a computer program that more smoothly provide an image and/or image data to a user who desires imaging by a spacecraft in order to at least partially address the above-described problem.

### Solution to Problem

A processing device according to one aspect is "a processing device including at least one processor used in connection with a spacecraft that images the earth, and the at least one processor is configured to: from a terminal device of a user, receive an order condition including coordinates of a point to be imaged or the coordinates and a date and time to image the point; transmit a determination result indicating whether or not the imaging by the spacecraft based on the order condition is possible to the terminal device of the user; and transmit at least one candidate condition including a candidate date and time when the imaging of the point is possible to the terminal device of the user in a case where the determination result indicates that the imaging by the spacecraft based on the order condition is possible".

A computer program according to one aspect is able to "cause at least one processor to function to, by being executed by the at least one processor mounted in a processing device used in connection with a spacecraft that images the earth: from a terminal device of a user, receive an order condition including coordinates of a point to be imaged or the coordinates and a date and time to image the point; transmit a determination result indicating whether or not the imaging by the spacecraft based on the order condition is possible to the terminal device of the user; and transmit at least one candidate condition including a candidate date and time when the imaging of the point is possible to the terminal device of the user in a case where the determination result indicates that the imaging by the spacecraft based on the order condition is possible".

A computer program according to another aspect is able to "cause at least one processor to function to, by being executed by the at least one processor mounted in a terminal device of a user: transmit an order condition including coordinates of a point to be imaged or the coordinates and a date and time to image the point to a processing device used in connection with a spacecraft that images the earth; receive, from the processing device, a determination result indicating whether or not the imaging by the spacecraft based on the order condition is possible; and receive, from the processing device, at least one candidate condition including a candidate date and time when the imaging of the point is possible in a case where the determination result indicates that the imaging by the spacecraft based on the order condition is possible".

### Advantageous Effects of Invention

According to the technology disclosed in the present application, it is possible to provide a processing device and a computer program that more smoothly provide an image or image data to a user who desires imaging by a spacecraft.

### Brief Description of Drawings

Fig. 1 is a block diagram illustrating an example of a configuration of an observation system including a tasking system (processing device) according to an embodiment.
Fig. 2 is a block diagram illustrating an example of a configuration of each terminal device 4 included in the observation system illustrated in Fig. 1.
Fig. 3 is a perspective view illustrating an example of a configuration of each spacecraft 1 included in the observation system illustrated in Fig. 1.
Fig. 4 is a block diagram illustrating an example of the configuration of each spacecraft 1 included in the observation system illustrated in Fig. 1.
Fig. 5 is a block diagram illustrating an example of functions of a management device 6 included in an observation system 10 illustrated in Fig. 1.
Fig. 6 is a table conceptually illustrating an example of processing executed by the management device 6 included in the observation system 10 illustrated in Fig. 1.
Fig. 7 is a flowchart illustrating an example of an operation executed by the observation system illustrated in Fig. 1.
Fig. 8 is a schematic diagram conceptually illustrating an example of processing executed by a tasking system 5 included in the observation system 10 illustrated in Fig. 1.
Fig. 9 is a schematic diagram conceptually illustrating an example of processing executed by the tasking system 5 included in the observation system 10 illustrated in Fig. 1.
Fig. 10 is a schematic diagram conceptually illustrating an example of processing executed by the tasking system 5 included in the observation system 10 illustrated in Fig. 1.
Fig. 11A is a schematic diagram illustrating an example of a screen displayed on the terminal device 4 included in the observation system 10 illustrated in Fig. 1.
Fig. 11B is a schematic diagram illustrating an example of the screen displayed on the terminal device 4 included in the observation system 10 illustrated in Fig. 1.
Fig. 11C is a schematic diagram illustrating an example of the screen displayed on the terminal device 4 included in the observation system 10 illustrated in Fig. 1.
Fig. 12 is a schematic diagram illustrating another example of the screen displayed on the terminal device 4 included in the observation system 10 illustrated in Fig. 1.
Fig. 13 is a schematic diagram illustrating still another example of the screen displayed on the terminal device 4 included in the observation system 10 illustrated in Fig. 1.
Fig. 14 is a schematic diagram illustrating still another example of the screen displayed on the terminal device 4 included in the observation system 10 illustrated in Fig. 1.
Fig. 15 is a block diagram illustrating an example of a configuration of an observation system 10A according to another embodiment.
Fig. 16 is a block diagram illustrating an example of a configuration of an observation system 10B according to still another embodiment.
Fig. 17A is a diagram illustrating an example of an image acquired by the observation system illustrated in Fig. 1.
Fig. 17B is a diagram illustrating another example of an image acquired by the observation system illustrated in Fig. 1.
Fig. 17C is a diagram illustrating still another example of an image acquired by the observation system illustrated in Fig. 1.
Fig. 17D is a diagram illustrating still another example of an image acquired by the observation system illustrated in Fig. 1.
Fig. 17E is a diagram illustrating still another example of an image acquired by the observation system illustrated in Fig. 1.
Fig. 18 is a schematic diagram illustrating an example of a status displayed by the terminal device 4 included in the observation system illustrated in Fig. 1.
Fig. 19 is a flowchart illustrating each status displayed by the terminal device 4 included in the observation system illustrated in Fig. 1.
Fig. 20 is a schematic diagram illustrating an example in which each imaging request is processed according to a priority by the tasking system 5 included in the observation system illustrated in Fig. 1.

### Description of Embodiments

Hereinafter, various embodiments of the present invention will be described with reference to the accompanying drawings. Note that components common in the drawings are denoted by the same reference numerals. In addition, it should be noted that the components illustrated in a certain drawing may be omitted in another drawing for convenience of description. Furthermore, it should be noted that the accompanying drawings are not necessarily to scale.

Various systems, methods, and devices described in the present specification are not to be construed as being limited by any method. In practice, the present disclosure is directed to any novel features and aspects of each of various embodiments disclosed, combinations of the various embodiments with one another, and combinations of portions of the various embodiments with one another. The various systems, methods, and devices described in the present specification are not limited to particular aspects, features, or combinations of such particular aspects and features, nor do articles and methods described in the present specification require that there be one or more particular effects or problems be solved. Furthermore, various features or aspects of the various embodiments described in the present specification, or portions of such features or aspects, may be used in combination with one another.

Although operations of some of the various methods disclosed in the present specification have been described along a particular order for convenience, it should be understood that describing such an approach includes reordering the above operations unless a particular order is required by a particular sentence below. For example, a plurality of operations described in sequence is, in some cases, rearranged or performed simultaneously. Furthermore, for purposes of simplicity, the accompanying drawings do not depict various ways in which various items and methods described in the present specification may be used in conjunction with other items and methods.

Operational theory, scientific principle or other theoretical description presented in the present specification in connection with the devices or methods of the present disclosure is provided for better understanding and is not intended to limit the scope of the technology. The devices and methods in the appended claims are not limited to those that operate by the methods described by such operational theory.

Any of the various methods disclosed in the present specification can be implemented using a plurality of computer-executable instructions stored on one or more computer-readable media, and further executed in a computer. The one or more media may be non-transitory computer-readable storage media, such as, for example, at least one optical media disk, a plurality of volatile memory components, or a plurality of non-volatile memory components. Here, the plurality of volatile memory components includes, for example, a DRAM or an SRAM. The plurality of non-volatile memory components include, for example, a hard drive and a solid state drive (SSD). Further, the computer includes any computer available on the market, including, for example, a smartphone and other mobile devices having hardware to perform calculations.

Any of such computer-executable instructions for implementing the techniques disclosed in the present specification can be stored on one or more computer-readable media (for example, non-transitory computer-readable storage media) along with any data generated and used during implementation of the various embodiments disclosed in the present specification. Such computer-executable instructions may be, for example, part of a separate software application, or part of a software application that is accessed or downloaded via a web browser or other software application (such as a remote computing application). Such software can be executed on, for example, a single local computer (as a process executed on any suitable computer, e.g. available on the market), or in a network environment (for example, the Internet, a wide area network, a local area network, a client-server network (such as a cloud computing network), or other such networks) using one or more network computers.

For clarity, only certain selected various aspects of various software-based implementations are described. Other details well known in the art are omitted. For example, the technology disclosed in the present specification is not limited to a particular computer language or program. For example, the technology disclosed in the present specification can be executed by software written in C, C++, Java (registered trademark), or any other suitable programming language. Similarly, the technology disclosed in the present specification is not limited to a particular computer or a particular type of hardware. Specific details of suitable computers and hardware are well known and need not be described in detail in the present specification.

Furthermore, any of the various embodiments based on such software (including, for example, a plurality of computer-executable instructions for causing a computer to execute any of the various methods disclosed in the present specification) can be uploaded, downloaded or accessed in a remote manner by a suitable communication means. Such suitable communication means include, for example, the Internet, the world wide web, an intranet, a software application, a cable (including a fiber optic cable), magnetic communication, electromagnetic communication (including RF communication, microwave communication, and infrared communication), electronic communication, or other such communication means.

### 1. Overall Configuration of Observation System

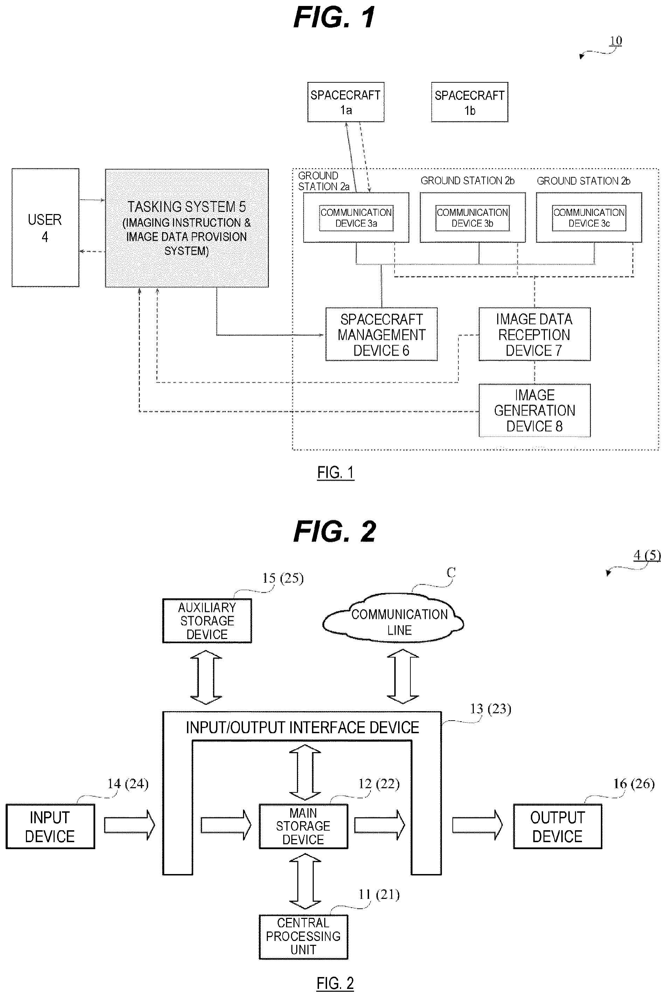

Fig. 1 is a block diagram illustrating an example of a configuration of an observation system including a tasking system (processing device) according to an embodiment. As illustrated in Fig. 1, an observation system (imaging system) 10 according to an embodiment can include a tasking system (processing device) 5, a terminal device 4 of at least one user connectable to the tasking system 5 via a communication line, a management device 6 connectable to the tasking system 5 via a communication line, an image data reception device 7 and an image generation device 8 connectable to the tasking system 5 via a communication line, at least one ground station 2 connectable to the management device 6 via a communication line, and at least one spacecraft 1 connectable to the ground station 2 via a communication line.

Extremely briefly, in the observation system 10, the user can first operate the terminal device 40 to transmit, to the tasking system 5, order conditions including coordinates of a point to be imaged, or including coordinates of a point to be imaged, date and time to image the point, and the like. In response to the transmission, the tasking system 5 can transmit a determination result indicating whether or not imaging based on the order conditions received from the user is possible to the terminal device 4 of the user. In this case, the tasking system 5 can transmit at least one candidate condition including a candidate date and time when the point can be imaged to the tasking system 4 of the user.

The terminal device 4 that has received the at least one candidate condition can present the at least one candidate condition to the user by displaying the at least one candidate condition on a display unit. Furthermore, the terminal device 4 can cause the user to select any one of the at least one candidate condition as a selection condition. As a result, the terminal device 4 can transmit the selection condition selected by the user to the tasking system 5.

The tasking system 5 that has received the selection condition can cause any spacecraft 1 to execute imaging based on the selection condition via the management device 6 and the ground station 2. Furthermore, the tasking system 5 can receive image data acquired by the spacecraft 1 by the imaging and/or an image generated on the basis of the image data via the ground station 2, the reception device 7 and/or the image generation device 8, or the like. As a result, the tasking system 5 can transmit the image data and/or the image to the terminal device 4 of the user.

In this manner, the tasking system 5 can provide the user with a service (imaging service/observation service) of transmitting the image data and/or the image requested by the user.

### 2. Terminal Device 4

The terminal device 4 may be an information processing device managed and/or operated by the user. Although Fig. 1 illustrates only the terminal device 4 of one user as such a terminal device 4, the terminal device 4 of at least one another user can be used in addition to the terminal device 4 of one user. Each terminal device 4 is operated by the user of the terminal device, and the user can input various types of information regarding imaging by the spacecraft 1 via a user interface. Furthermore, each terminal device 4 can receive and display various types of information including the image data acquired by the spacecraft 1 and/or the image generated on the basis of the image data via the tasking system 5.

Each terminal device 4 may be an arbitrary information processing device. Such information processing devices can include, but are not limited to, smartphones, tablets, personal computers, workstations, personal digital assistants, mobile phones, and the like, for example.

Fig. 2 is a block diagram illustrating an example of a configuration of each terminal device 4 included in the observation system illustrated in Fig. 1. As illustrated in Fig. 2, the terminal device 4 can include a central processing unit 11, a main storage device 12, an input/output interface device 13, an input device 14, an auxiliary storage device 15, and an output device 16. These devices are connected by a data bus and/or a control bus.

The central processing unit 11 is referred to as a "central processing unit (CPU)", and can perform an operation for instructions and data stored in the main storage device 12 and store a result of the operation in the main storage device 12. Furthermore, the central processing unit 11 can control the input device 14, the auxiliary storage device 15, the output device 16, and the like via the input/output interface device 13. The terminal device 4 can include one or more such central processing units 11.

The main storage device 12 is referred to as a "memory", and can store the instructions and data received from the input device 14, the auxiliary storage device 15, and a communication line C (the tasking system 5 or the like) via the input/output interface device 13, and the operation result of the central processing unit 11. The main storage device 12 can include, but is not limited to, a computer-readable medium such as a volatile memory (for example, a register, a cache, or a random access memory (RAM)), a non-volatile memory (for example, a read-only memory (ROM), an EEPROM, or a flash memory), and a storage (for example, a hard disk drive (HDD), a solid state drive (SSD), a magnetic tape, or an optical medium). As will be readily appreciated, the term "computer-readable recording medium" may include media for data storage, such as memory and storage, rather than transmission media, such as modulated data signals or transitory signals.

The auxiliary storage device 15 is a storage device having a larger capacity than the main storage device 12. The auxiliary storage device 15 stores the instructions and data (computer program) constituting a specific application or the like, and is controlled by the central processing unit 11, thereby transmitting the instructions and data (computer program) to the main storage device 12 via the input/output interface device 13. The auxiliary storage device 15 can include, but is not limited to, a magnetic disk device and/or an optical disk device.

The specific application referred to herein can include, but is not limited to, an operation system, various software applications (including a web browser), a dedicated application executed for the user to receive the imaging service via the tasking system 5, and the like.

The input device 14 is a device that captures data from an outside, and can include, but is not limited to, a keyboard, a touch panel, a button, a mouse, and/or a sensor (a microphone or a camera).

The output device 16 can include, but is not limited to, a display device, a touch panel, a printer device, and/or the like.

In such a hardware configuration, the central processing unit 11 can sequentially load the instructions and data (computer program) constituting the specific application stored in the auxiliary storage device 15 into the main storage device 12 and operate the loaded instructions and data. As a result, the central processing unit 11 can control the output device 16 via the input/output interface device 13, or can transmit and receive various types of information (data) to and from other devices (for example, the tasking system 5 and/or another terminal device 4, and the like) via the input/output interface device 13 and the communication line C.

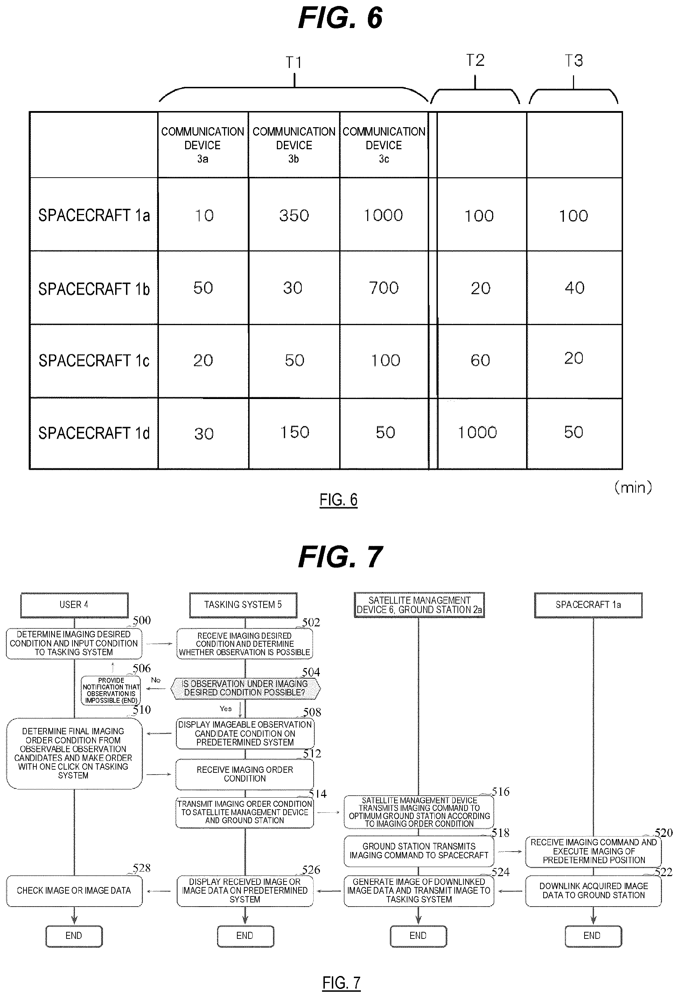

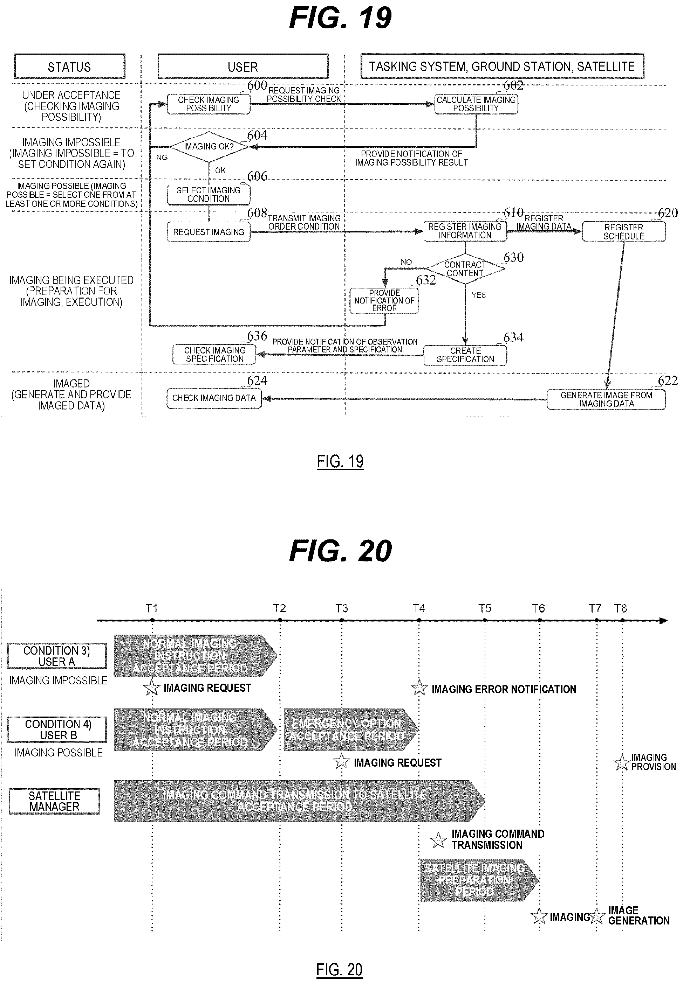

In this manner, the terminal device 4 can execute operations and the like (various operations and the like to be described below with reference to Figs. 7 and 19 and the like) related to reception of provision of the imaging service (observation service) and the like by executing the installed specific application. In addition to or instead of the above configuration, the terminal device 4 can also execute the operations and the like (various operations and the like to be described below with reference to Figs. 7 and 19 and the like) related to reception of provision of the imaging service and the like by executing a browser and accessing another server device (processing device) (not illustrated).

Note that the terminal device 4 can include one or more microprocessors and/or a graphics processing unit (GPU) or the like instead of the central processing unit 11 or together with the central processing unit 11.

### 3. Tasking System 5

Returning to Fig. 1, the tasking system 5 is an information processing device that transmits and/or receives information to and from the terminal device 4 of the user, the management device 6, the reception device 7, and/or the image generation device 8, thereby providing the imaging service (observation service) to the terminal device 4 of the user.

Fig. 1 illustrates an example in which the tasking system 5 is configured using one information processing device. However, the tasking system 5 can also be configured using a plurality of information processing devices that are connected to each other via a communication line and operate in cooperation with each other.

The tasking system 5 may be any information processing device. Such an information processing device can include, but is not limited to, for example, a workstation, a supercomputer, a mainframe, a personal computer, and the like.

As illustrated in parentheses in Fig. 2 referred to above, the tasking system 5 can include a central processing unit 21, a main storage device 22, an input/output interface device 23, an input device 24, an auxiliary storage device 25, and an output device 26. These devices are connected by a data bus and/or a control bus.

Each of these devices is as described in connection with the terminal device 4.

The specific application stored in the auxiliary storage device 25 and executed by the central processing unit 21 can include, but is not limited to, an operation system, various software applications, dedicated applications executed to provide the imaging service, and the like.

In such a hardware configuration, the central processing unit 21 can sequentially load the instructions and data (computer program) constituting the specific application stored in the auxiliary storage device 25 into the main storage device 22 and operate the loaded instructions and data. As a result, the central processing unit 21 can control the output device 26 via the input/output interface device 23, or can transmit and receive various types of information (data) to and from other devices (for example, the terminal device 4, the management device 6, the reception device 7, the image generation device 8, and/or another tasking system 5, and the like) via the input/output interface device 23 and the communication line C.

In this manner, the tasking system 5 can execute operations and the like (various operations and the like to be described below with reference to Figs. 7 and 19 and the like) related to provision of the imaging service and the like by executing the installed specific application.

Note that the tasking system 5 can include one or more microprocessors and/or a graphics processing unit (GPU) or the like instead of the central processing unit 21 or together with the central processing unit 21.

Note that the communication line that connects each terminal device 4 and the tasking system 5 can include, but is not limited to, a mobile phone network, a wireless network (WiFi, WiMax, cellular, etc.), a fixed-line network, the Internet, a local area network (LAN), a wide area network (WAN), an intranet, and/or Ethernet (registered trademark).

### 4. Spacecraft 1

Returning to Fig. 1, the observation system 10 can include at least one spacecraft 1. Although two spacecraft 1a and 1b are illustrated in Fig. 1, the observation system 10 may include three or more spacecrafts 1. Each spacecraft 1 may be, for example, an artificial satellite, but is not limited thereto, and may include all mobile objects capable of traveling in outer space.

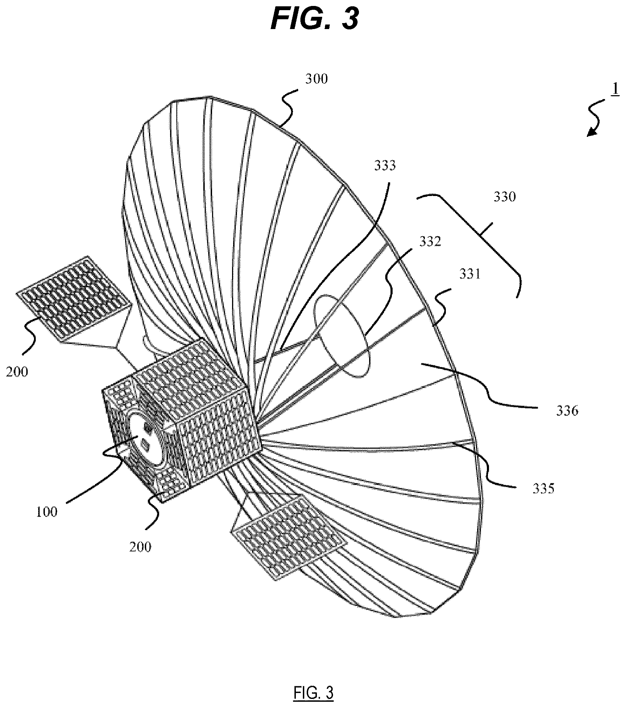

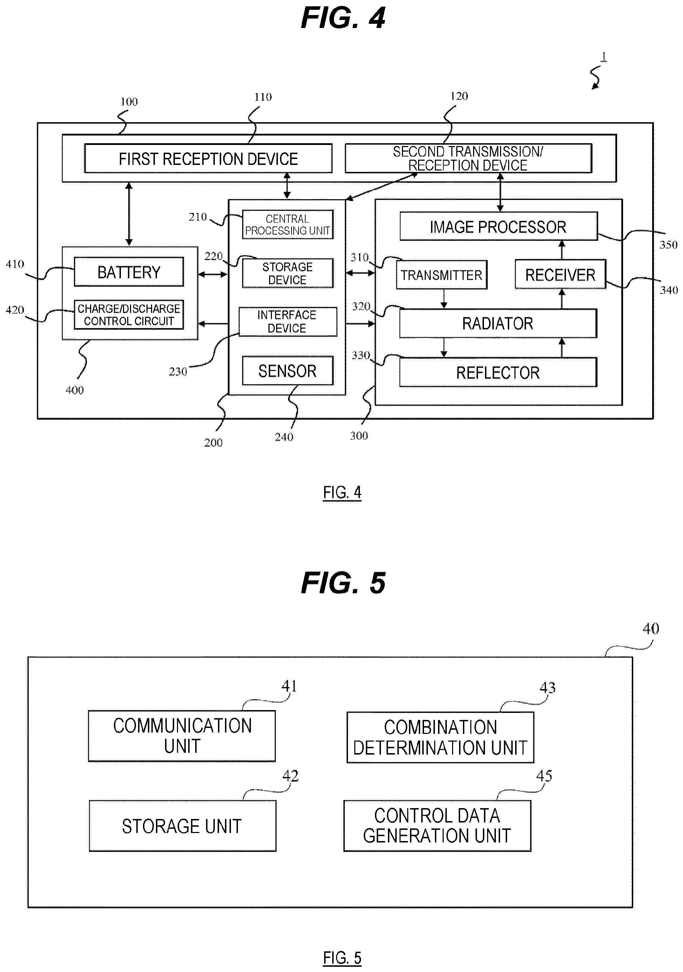

An example of a configuration of each spacecraft 1 will be described with reference to Figs. 3 and 4. Fig. 3 is a perspective view illustrating an example of a configuration of each spacecraft 1 included in the observation system illustrated in Fig. 1. Fig. 4 is a block diagram illustrating an example of the configuration of each spacecraft 1 included in the observation system illustrated in Fig. 1.

As illustrated in Figs. 3 and 4, each spacecraft 1 can include a communication device 100 that executes transmission and reception of various data with the ground station 2, an imaging device 300 that images the earth, a control device 200 that controls an imaging operation of the imaging device 300, a posture of the spacecraft 1, and the like, and a power supply unit 400 that supplies power to the communication device 100, the control device 200, and the imaging device 300. The communication device 100, the control device 200, the imaging device 300, and the power supply unit 400 can be electrically connected to each other via a control line and/or a data line.

### (1) Communication Device 100

As illustrated in Fig. 4, the communication device 100 may include a first reception device 110 and a second transmission/reception device 120. The first reception device 110 can receive control data regarding the imaging operation by the imaging device 300 transmitted from (a communication device 3 mounted on) the ground station 2 and transmit the control data to the imaging device 300. The second transmission/reception device 120 can transmit and/or receive various data to/from the ground station 2.

The second transmission/reception device 120 can transmit, for example, imaging data acquired by the control device 200 and space position data regarding the position of the spacecraft 1 in outer space monitored by the control device 200 to the ground station 2. Note that the space position data of the spacecraft 1 can be acquired as needed by a sensor 240 to be described below.

In addition, the second transmission/reception device 120 can receive identification data of each of a plurality of the communication devices 3 from the ground station 2 and store the identification data in a storage device 220 to be described below. As a result, when the second transmission/reception device 120 receives the control data from a certain communication device 3, it is possible to recognize from which communication device 3 among the plurality of communication devices 3 the control data has been received on the basis of the identification data of the certain communication device 3 included in the control data. In addition, the identification data of each of the plurality of communication devices 3 transmitted from the ground station 2 to the second transmission/reception device 120 includes position data of each communication device 3. As a result, the second transmission/reception device 120 can store the position data and ID data of each of the plurality of communication devices 3 in association with each other in the storage device 220. Therefore, in a case where the control data is transmitted from the certain communication device 3 to the spacecraft 1, it is not always necessary to include the position data of the certain communication device 3 in the control data, and capacity of the control data can be reduced (in this case, if the control data includes the ID data of the certain communication device 3, the position data of the certain communication device 3 related to the ID data can be grasped by referring to the storage device 220 in the spacecraft 1).

As illustrated in Fig. 4, the first reception device 110 and the second transmission/reception device 120 may be provided separately or integrally in the communication device 100.

The transmission of the control data from the communication device 3 mounted on the ground station 2 to the first reception device 110 is preferably executed by low power wide area (LPWA) wireless communication, and can be executed by, for example, LoRa wireless communication. Therefore, a dedicated communication module (including a dedicated communication antenna) for executing the LoRa scheme wireless communication can be mounted on the first reception device 110 and the communication device 3.

By transmitting the control data from the communication device 3 to the first reception device 110 using the LPWA method (LoRa method) capable of performing long-distance communication between the ground and outer space, the first reception device 110 (and the communication device 3) can be downsized.

Meanwhile, in the wireless communication based on the LoRa method, it is known that there is a restriction on the capacity of data transmission. Therefore, it is preferable to design in advance the capacity of the control data transmitted from the communication device 3 to the first reception device 110 to be, for example, 100bps or less. To set the capacity of the control data to 100bps or less, for example, content of the control data may include selection data for selecting one of operation patterns related to the imaging operations executable by the imaging device 300, data indicating a position to be imaged on the earth imaged by the imaging device 300 (position to be imaged data), and imaging time data by the imaging device 300.

Here, as for the selection data, for example, by storing a plurality of operation patterns regarding the imaging operations of the spacecraft 1 (imaging device 300) assumed in advance in the control device 200 (storage device 220 of the control device 200) together with encrypted data, it becomes possible to transmit only this encrypted data from the communication device 3 to the first reception device 110. In this case, by transmitting the encrypted data received by the first reception device 110 from the communication device 3 to the control device 200, the control device 200 can read the operation pattern corresponding to the encrypted data from the storage device 220 and control the imaging operation of the imaging device 300 according to the operation pattern.

The plurality of operation patterns described above means a plurality of imaging modes, and can include, for example, two modes of a wide-area imaging mode and a high-resolution imaging mode. In this case, the wide-area imaging mode and the high-resolution imaging mode can be respectively encrypted to "MODE1" and "MODE2" ("MODE1" and "MODE2" are the encrypted data, respectively). Note that the plurality of operation patterns is not limited to the two modes of the wide-area imaging mode and the high-resolution imaging mode, and may include other modes.

The above-described position to be imaged data is data indicating a certain point or region on the earth to be imaged, and may be, for example, data indicating latitude and longitude corresponding to this point or region. Furthermore, the above-described imaging time data may be data indicating a date and time when the imaging is to be executed (date and time when the imaging, observation, or the like by the spacecraft 1 is required).

In summary, for example, the control data "2022-10-14/13:00/33.55 degrees north latitude/135.55 degrees east longitude/MODE1/(FROM 20B TO 10 A)" can be transmitted from the communication device 3 to the first reception device 110. In this case, "2022-10-14/13:00" corresponds to the imaging time data, "33.55 degrees north latitude/135.55 degrees east longitude" corresponds to the position to be imaged data, and "MODE1" corresponds to the selection data. Note that the control data may include the identification data (for example, "20 B") of the communication device 3 as a transmission source.

The transmission and reception of various data between the second transmission/reception device 120 and the ground station 2 can be performed using the above-described LPWA wireless communication, but is not limited thereto, and can be performed using various general communication methods.

### (2) Control Device 200

The control device 200 can receive the control data received by the first reception device 110 from the communication device 3 from the first reception device 110 and control the imaging operation of the imaging device 300 on the basis of the control data. Further, the control device 200 can control the posture and the like of the spacecraft 1 in association with the imaging operation.

The control device 200 includes, as hardware, a central processing unit 210, the storage device 220, an interface device 230, the sensor 240, and the like connected to each other via a data bus and/or a control bus, and can execute various types of information processing to be described below.

The central processing unit 210 is referred to as, for example, "CPU", and can generate a control signal related to the imaging operation of the imaging device 300 and a control signal related to the posture of the spacecraft 1 related to the imaging operation by performing various operations on the basis of the instructions and data stored in the storage device 220.

The storage device 220 can store the instructions and data received via the interface device 230 or the like, operation results of the central processing unit 210, and the like. Furthermore, the storage device 220 can store instructions and data (computer program) constituting specific applications (for example, an application for controlling the imaging operation of the imaging device 300, an application for controlling the posture of the spacecraft 1, and the like). The storage device 220 can include, but is not limited to, a computer-readable medium, such as a random access memory (RAM), a read-only memory (ROM), a flash memory, or a hard disk drive (HDD).

Furthermore, as described above, the storage device 220 can store the plurality of operation patterns regarding the imaging operations of the imaging device 300 assumed in advance together with the encrypted data. For example, the storage device 220 can store the encrypted data of "MODE1" as the wide-area imaging mode and the encrypted data of "MODE2" as the high-resolution imaging mode. Furthermore, the storage device 220 can store various data, operation methods therefor, and the like (computer programs and the like) such as information regarding posture control of the spacecraft 1 corresponding to each of the wide-area imaging mode and the high-resolution imaging mode (for example, the spacecraft 1 may be subjected to posture control to maintain the same posture with respect to a ground surface at the position to be imaged in the wide-area imaging mode, whereas the spacecraft 1 may be subjected to posture control for tracking the ground surface at the position to be imaged in the high-resolution imaging mode), information regarding a frequency of radio waves emitted from the imaging device 300 and an irradiation time of the radio waves emitted from the imaging device 300 (for example, several seconds to several minutes in the wide-area imaging mode, whereas several seconds in the high-resolution imaging mode), information regarding conditions such as modulation and demodulation, information regarding the time required for the imaging operation, and the like. As a result, the central processing unit 210 can generate various control signals related to the imaging operations of the imaging device 300.

Furthermore, as described above, the storage device 220 can store the identification data of each of the plurality of communication devices 3. For example, the storage device 220 can store the position data and the ID data of each of the plurality of communication devices 3 in association with each other.

As an example, the sensor 240 may include a gyro sensor, an acceleration sensor, a position sensor, and/or a speed sensor used for traveling of the spacecraft 1, acquisition of various data regarding the position, posture, and the like in outer space, and control thereof. Furthermore, the sensor may include, for example, a temperature sensor, an illuminance sensor, and/or an infrared sensor for observing an external environment and/or an internal environment of the spacecraft 1. The various sensor data acquired by the sensors can be stored in the storage device 220, then used for arithmetic processing by the central processing unit 210, and transmitted to the ground station 2 via the second transmission/reception device 120.

### (3) Imaging Device 300

The imaging device 300 receives the control signal generated by the above-described control device 200 and executes the imaging operation. For example, a synthetic aperture radar can be used as the imaging device 300. As illustrated in Figs. 3 and 4, the imaging device 300 can include a transmitter 310, a radiator 320, a reflector 330, a receiver 340, and an image processor 350.

The transmitter 310 transmits a pulse signal of a predetermined frequency on the basis of the control signal from the control device 200. The pulse signal is subjected to processing such as modulation and/or demodulation, converted into a high-frequency radio frequency, then amplified, radiated from the radiator 320 to the reflector 330, and then radiated to an external space of the imaging device 300. Thereafter, the transmitter 310 receives the radio wave (reflected wave) reflected at a point to be imaged by the receiver 340 via the reflector 330 and the radiator 320. The image processor 350 can generate the image data at the point to be imaged on the basis of the reflected wave. The image data generated by the image processor 350 can be transmitted to the ground station 2 via the above-described second transmission/reception device 120. Note that the reflected wave received by the receiver 340 can also be transmitted to the ground station 30 via the second transmission/reception device 120.

Here, as illustrated in Fig. 3, the radiator 320 and the reflector 330 correspond to antennas. The reflector 330 can include a sub reflector (sub reflecting mirror) 332 that is disposed to face the radiator 320 at a predetermined angle and reflects the radio wave radiated from the radiator 320 to a reflector 331 that is a main reflecting mirror, the reflector 331 that is disposed to face a mirror surface of the sub reflector 332 and further reflects the radio wave reflected by the sub reflector 332 to radiate the radio wave to the external space of the imaging device 300, and a support member 333 that supports the sub reflector 332.

The reflector 331 includes a plurality of ribs 335, a planar body 336, and the like, and a reflection surface thereof can be formed in a parabolic (parabolic) shape in order to function as the main reflecting mirror. Since details of the antenna including the ribs 335, the planar body 336, and other components are already known, detailed description thereof is omitted.

### (4) Power Supply Unit 400

As illustrated in Fig. 4, the power supply unit 400 can include a battery 410 and a charge/discharge control circuit 420. As the battery 410, a solar cell using a solar panel can be used as an example. The battery 410 is connected to the communication device 100, the control device 200, and the imaging device 300, and can supply power to each device. The charge/discharge control circuit 420 can control the power supply from the battery 410 to each device and charge/discharge of the battery 410.

### 5. Ground Station 2

Returning to Fig. 1, the observation system 10 can include at least one ground station 2. Although three ground stations 2a, 2b, and 2c are illustrated in Fig. 1, the observation system 10 may include any number of ground stations 2.

Each ground station 2 is a generally known ground station, and can include, for example, a battery (not illustrated), the communication device 3 for transmitting and receiving various data to and from each of the plurality of spacecrafts 1, and a second communication unit (not illustrated) for transmitting and receiving various data to and from the management device 6. Each ground station 2 and the management device 6 are connected via a communication line.

As a result, each ground station 2 can receive, from each of the spacecrafts 1, captured (acquired) image data (imaging data) or an image generated on the basis of the image data, the space position data regarding the position of the spacecraft 1 in outer space monitored by the control device 200, and the like, and can transmit the received image data (or image) and space position data to the management device 6. Meanwhile, each ground station 2 can receive the identification data of each of the plurality of communication devices 3 from the management device 6 and transmit (transmit) the received identification data to each of the plurality of spacecrafts 1.

Note that the communication line that connects each ground station 2 and the management device 6 can include, but is not limited to, a mobile phone network, a wireless network (WiFi, WiMax, cellular, etc.), a fixed-line network, the Internet, a local area network (LAN), a wide area network (WAN), an intranet, and/or Ethernet (registered trademark).

### 6. Communication Device 3

As described above, each ground station 2 can include the communication device 3. Each communication device 3 can be mounted with a dedicated communication module (including a dedicated communication antenna) for performing the wireless communication by the LoRa method with the spacecraft 1. Furthermore, each communication device 3 can include a transmission/reception device for transmitting and receiving various data to and from a battery and the management device 6 to be described below. The communication device 3 and the management device 6 are connected via a communication line. As a result, the identification data of each communication device 3 can be transmitted from the communication device 3 to the management device 6. Here, the identification data may include the position data, serial number data (ID data), and the like of each communication device 3.

Furthermore, each of the plurality of communication devices 3 and the management device 6 are connected via a communication line, so that each of the communication devices 3 can transmit the above-described control data to the predetermined spacecraft 1 on the basis of an instruction signal (command signal) received from the management device 6.

Note that the communication line that connects the communication device 3 and the management device 6 can include, but is not limited to, a mobile phone network, a wireless network (WiFi, WiMax, cellular, etc.), a fixed-line network, the Internet, a local area network (LAN), a wide area network (WAN), an intranet, and/or Ethernet (registered trademark).

### 7. Management Device 6

The management device 6 can receive the candidate condition (selection condition) selected by the user from the tasking system 5, and select an appropriate ground station 2 from among the plurality of ground stations 2 and an appropriate spacecraft 1 from among the plurality of spacecrafts 1 in order to execute imaging based on the candidate condition. Such a management device 6 can also be configured by an information processing device including the configuration illustrated in Fig. 2.

Although Fig. 1 illustrates an example in which one management device 6 is used, it is also possible to use a plurality of the management devices 6 for the purpose of, for example, distributing loads. The management device 6 can execute various types of processing to be described below by executing the specific application installed to provide the observation service to the user.

As illustrated in Fig. 1, the management device 6 can be connected to the plurality of ground stations 2 (in Fig. 1, the ground stations 2a, 2b, and 2c) via a communication line. As a result, the management device 6 can transmit, to each of the plurality of ground stations (the plurality of communication devices 3), an instruction signal (command signal) indicating transmission of the above-described control data to the predetermined spacecraft 1 (in other words, the management device 6 can control transmission of the control data to the spacecraft 1 by the communication device 3). Further, the management device 6 can receive the above-described identification data from each of the plurality of ground stations 2 (the plurality of communication devices 3).

In addition, the management device 6 can transmit the identification data of each of the plurality of communication devices 3 to each ground station 2.

Further, the management device 6 can be connected to the tasking system 5 via a communication line. The communication line in this case can also include, but is not limited to, a mobile phone network, a wireless network (WiFi, WiMax, cellular, etc.), a fixed-line network, the Internet, a local area network (LAN), a wide area network (WAN), an intranet, and/or Ethernet (registered trademark).

As a result, the management device 6 can receive imaging request data for requesting imaging of a certain point (or a certain region) from the tasking system 5. Note that the imaging request data can include, for example, the position to be imaged data that specifies the "certain point" (the point to be imaged) and the imaging time data that specifies the date and time to image the point. The position to be imaged data can include, for example, is not limited to, latitude data, longitude data, and/or address data at the "certain point".

A hardware configuration of the management device 6 can include a central processing unit, a storage device, and an interface device, and this configuration can be similar to the central processing unit 210, the storage device 220, and the interface device 230 in the control device 200 described above.

The central processing unit is referred to as, for example, "CPU", and can perform various operations on the basis of the instructions and data stored in the storage device.

The storage device is referred to as "memory", and can store the instructions and data received via the interface unit or the like, the operation results of the central processing unit, and the like. In addition, the storage device can store instructions and data (computer program) constituting a specific application (for example, an application for determining the spacecraft 1 that executes the imaging operation, an application for determining the communication device 3 that transmits the control data to the spacecraft 1, an application for controlling content of the control data transmitted from the communication device 3 to the spacecraft 1, an application for controlling transmission and reception of data with the communication device 3, an application for controlling transmission and reception of data with the ground station 2, or the like). The storage device can include, but is not limited to, a computer-readable medium, such as a random access memory (RAM), a read-only memory (ROM), a flash memory, or a hard disk drive (HDD).

In such a hardware configuration, the central processing unit loads the instructions and data (computer program) constituting the specific application stored in the storage device, and can execute various types of arithmetic processing on the basis of the loaded instructions and data. Further, the central processing unit can transmit data generated by arithmetic processing to other components via the interface device, and can receive various data from the other components.

Next, specific functions of the management device 6 will be described with reference to Fig. 5. Fig. 5 is a block diagram illustrating an example of functions of the management device 6 included in the observation system 10 illustrated in Fig. 1.

As illustrated in Fig. 5, the management device 6 can include a communication unit 41, a storage unit 42, a combination determination unit 43, and a control data generation unit 44.

The communication unit 41 can transmit and receive the above-described various data to and from the plurality of communication devices 3, the ground station 2, and the tasking system 5. In particular, the communication unit 41 can transmit the above-described instruction signal (command signal) to the specific communication device 3 on the basis of a determination result by the combination determination unit 43 to be described below, and can transmit the control data to be transmitted from the specific communication device 3 to the specific spacecraft 1 to the specific communication device 3 on the basis of a determination result by the control data generation unit 44 to be described below.

The storage unit 42 can store various data received by the communication unit 41, data related to the determination results by the combination determination unit 43 and the control data generation unit 44, and the like. In addition, the storage unit 42 can store a specific application (for example, an application for determining the spacecraft 1 that executes the imaging operation, an application for determining the communication device 3 that transmits the control data to the spacecraft 1, an application for controlling content of the control data transmitted from the communication device 3 to the spacecraft 1, an application for controlling transmission and reception of data with the communication device 3, an application for controlling transmission and reception of data with the ground station 2, or the like described above) for the communication unit 41, the combination determination unit 43, and the control data generation unit 44 to execute predetermined processing.

The combination determination unit 43 can determine, from among the plurality of spacecrafts 1 and the plurality of ground stations 2 (communication devices 3), a combination of one spacecraft 1 and one ground station 2 (communication device 3), the one spacecraft 1 being capable of executing the imaging operation for the point specified by the position to be imaged data, and the one ground station 2 transmitting the above-described control data to the one spacecraft 1 capable of executing the imaging operation, at start timing specified by the imaging time data, on the basis of the position to be imaged data included in the imaging request data, space position data of each of the plurality of spacecrafts 1 received via the ground station 2 in advance, and the position data (identification data) of each of the plurality of communication devices 3. Note that, in a case where the plurality of spacecrafts 1 cooperatively executes imaging for the point corresponding to the position to be imaged data, the combination determination unit 43 can also determine a combination of the plurality of spacecrafts 1 capable of executing the imaging operation and the plurality of ground stations 2 (communication devices 3) that transmits the above-described control data to each of the plurality of spacecrafts 1 capable of executing the imaging operation.

Specifically, the combination determination unit 43 can refer to a table as illustrated in Fig. 6 obtained by calculating a first time (T1) required from the start to completion of transmission of the control data from the communication device 3 to the spacecraft 1, counting from the imaging date and time specified by the imaging time data, a second time (T2) required for the spacecraft 1 to complete the imaging operation (to receive all the reflected waves), counting from the completion of reception of the control data in the spacecraft 1, and a third time (T3) required to complete transmission of the image data (imaging data) from the spacecraft 1 to the ground station 2, counting from the completion of the imaging operation. The combination determination unit 43 can select a combination having the shortest total time of "T1 + T2 + T3" by referring to the table. As an example, in the case illustrated in Fig. 6, the combination determination unit 43 can determine the combination of the "spacecraft 1b and the communication device 3b" having the above-described total time of 90 minutes (the total time of 90 minutes including T1: 30 minutes, T2: 20 minutes, and T3: 40 minutes).

The combination determination unit 43 can transmit, to the control data generation unit 44, the position to be imaged data, data indicating the determined combination of the at least one spacecraft 1 and (the ground station 2 equipped with) the at least one communication device 3, and data regarding the total time (for example, in the case illustrated in Fig. 6, data of "the spacecraft 1b and (the ground station 2b equipped with) the communication device 3b" and data of the total time of 90 minutes).

The control data generation unit 44 can determine content of the control data to be transmitted to the ground station 2 equipped with the communication device 3 (in the case illustrated in Fig. 6, the communication device 3b) corresponding to the combination on the basis of the data regarding the combination of one spacecraft 1 and (the ground station 2 equipped with) one communication device 3 and the data regarding the total time received from the combination determination unit 43. The control data generation unit 44 can generate specific control data on the basis of (the point specified by) the position to be imaged data and (the date and time of starting the imaging operation specified by) the imaging time data.

Furthermore, the control data generation unit 44 can grasp a situation of the point (or region) to be imaged on the basis of the position to be imaged data and the like, and determine in which imaging mode the imaging device 300 of the spacecraft 1 should perform the imaging operation. The control data generation unit 44 can further generate the above-described selection data on the basis of the determination result.

The control data generation unit 44 can transmit, to the communication unit 41, the generated control data (position to be imaged data, imaging time data, and selection data) and a request signal for requesting one spacecraft 1 determined by the combination to transmit the control data. As a result, the communication unit 41 can transmit an instruction signal (command signal) including the control data and the request signal to (the ground station 2 equipped with) one communication device 3 determined by the above-described combination. Note that the control data transmitted from the communication unit 41 to (the ground station 2 equipped with) the communication device 3 can be specifically "2022-10-14/13:00/33.55 degrees north latitude/135.55 degrees east longitude/MODE1/(FROM 20B TO 10B)", for example.

### 8. Image Data Reception Device 7 and Image Generation Device 8

Returning to Fig. 1, the image data reception device 7 can receive the image data acquired by the spacecraft 1 via the ground station 2 (communication device 3). The image data reception device 7 can transmit the received image data to the tasking system 5 and/or the image generation device 8.

The image generation device 8 can generate an image on the basis of the image data received from the image data reception device 7. The image generation device 8 can transmit the image thus generated to the tasking system 5.

Here, the image data and the image generated on the basis of the image will be briefly described. The spacecraft 1 can acquire the image data by imaging a certain point on the earth. Such image data can be, for example, data including a plurality of coordinates corresponding to the certain point and a depth and time (date and time) associated with each coordinate included in the plurality of coordinates. Such image data can be generated in the form of a matrix, for example.

Here, in a case where the spacecraft 1 performs the imaging using a synthetic aperture radar, radio waves are radiated from the spacecraft 1 toward the certain point on the earth, and as a result, the spacecraft 1 can receive the radio waves reflected from the certain point and traveling toward the spacecraft 1. By using reception intensity of such radio waves and the time (date and time) at which such radio waves have been received, the spacecraft 1 can generate data including the plurality of coordinates corresponding to the certain point and the depth and the time (date and time) associated with each coordinate included in the plurality of coordinates.

Meanwhile, the image generated on the basis of the image data can be an image in which each coordinate included in the image data and the depth and the time corresponding to the coordinate are expressed in the form of a map. In such an image, a point corresponding to each coordinate can be expressed by a shade determined according to the depth corresponding to the coordinate. For example, in a case where the depth corresponding to a certain coordinate is deep (that is, the point corresponding to the coordinate is at a low position), the point corresponding to the certain coordinate can be expressed more densely, and in a case where the depth corresponding to the certain coordinate is shallow (that is, the point corresponding to the coordinate is at a high position), the point corresponding to the certain coordinate can be expressed more thinly.

### 9. Operation Executed by Observation System 10

Next, an example of an operation executed by the observation system 10 having the above-described configuration will be further described with reference to Fig. 7. Fig. 7 is a flowchart illustrating an example of an operation executed by the observation system illustrated in Fig. 1.

First, although not illustrated in Fig. 7, when the user operates the terminal device 4, the terminal device 4 can access the tasking system 5 by executing the above-described specific application.

In step (hereinafter referred to as "ST") 500, the user can input the coordinates of the point to be imaged by operating the input device 14 (for example, a keyboard, a mouse, and/or a touch panel, and the like) of the terminal device 4. In response to the input, the terminal device 4 can transmit the order condition including the coordinates of the point to be imaged to the tasking system 5. In another example, the user can input the date and time to image the point in addition to the coordinates of the point to be imaged. In this case, the terminal device 4 can transmit, to the tasking system 5, the order condition including the coordinates of the point to be imaged and the date and time to image the point.

In ST502, the tasking system 5 can receive the order condition transmitted by the terminal device 4. Furthermore, the tasking system 5 can determine whether or not imaging by the spacecraft 1 based on the order condition received from the terminal device 4 is possible.

In a case where the order condition includes only the coordinates of the point to be imaged, the tasking system 5 can determine whether or not imaging by the spacecraft 1 based on the order condition is possible by determining whether or not (the coordinates of) the point is included in an imageable range by the spacecraft 1.

Meanwhile, in a case where the order condition includes the coordinates of the point to be imaged and the date and time to image the point, the tasking system 5 can determine whether or not imaging by the spacecraft 1 based on the order condition is possible by determining whether or not (the coordinates of) the point is included in the imageable range by the spacecraft 1 at the date and time.

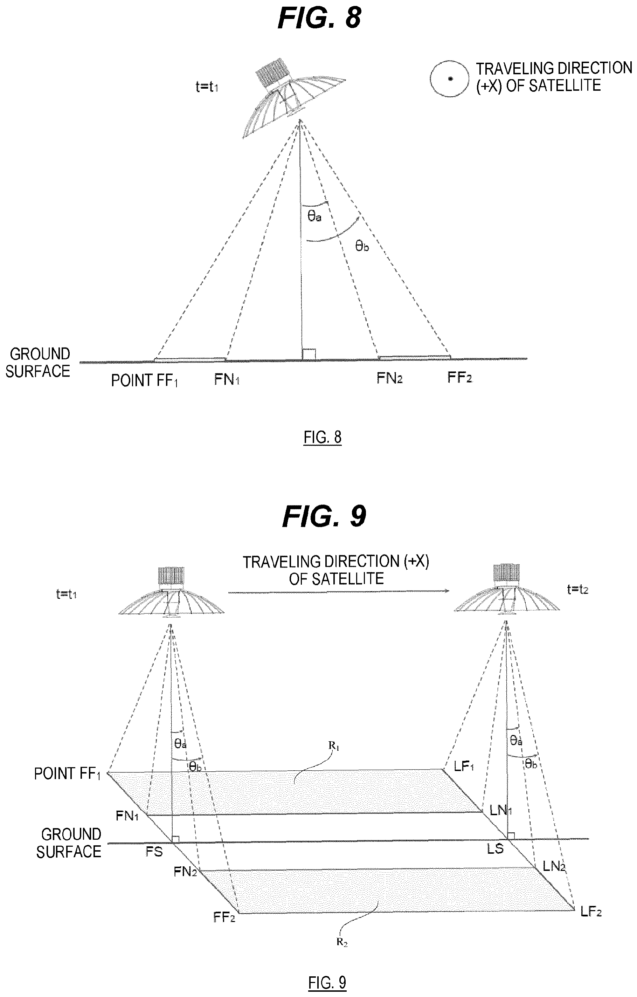

A specific example of how the tasking system 5 performs such a determination will be further described with reference to Figs. 8 to 10. Figs. 8 to 10 are schematic diagrams conceptually illustrating an example of processing executed by the tasking system 5 included in the observation system 10 illustrated in Fig. 1.

One factor that prevents observation using an SAR is an incident angle (off-nadir angle). An image (SAR image) obtained by using an SAR becomes white because layover occurs in a case where the incident angle is small, and conversely, is crushed in black because radar shadow occurs in a case where the incident angle is large. As a result, since the captured SAR image cannot be utilized, it is preferable to avoid imaging under such conditions.

Therefore, as illustrated in Figs. 8 and 9, it is assumed that the layover occurs at an angle smaller than an incident angle θa, and the radar shadow occurs at an angle larger than an incident angle θb. When the spacecraft 1 moves from a first satellite position (FS) to a last satellite position (LS) in a few seconds, a point at a near side and a point at a far side imageable by the spacecraft 1 can be defined as "near point" and "far point", respectively. Furthermore, imageable points at start timing can be defined as first near (FN) and first far (FF), and imageable points at end timing can be defined as last near (LN) and last far (LF).

Here, since the spacecraft 1 can image both sides (note that either one side at the same time) of an orbit when the orbit of the spacecraft 1 is set as a center, FN₁ and FF₁ can be defined as the imageable points at the start timing for one side on a map, and LN₁ and LF₁ can be defined as the imageable points at the end timing. For the other side, FN₂ and FF₂ can be defined as the imageable points at the start timing, and LN₂ and LF₂ can be defined as the imageable points at the end timing.

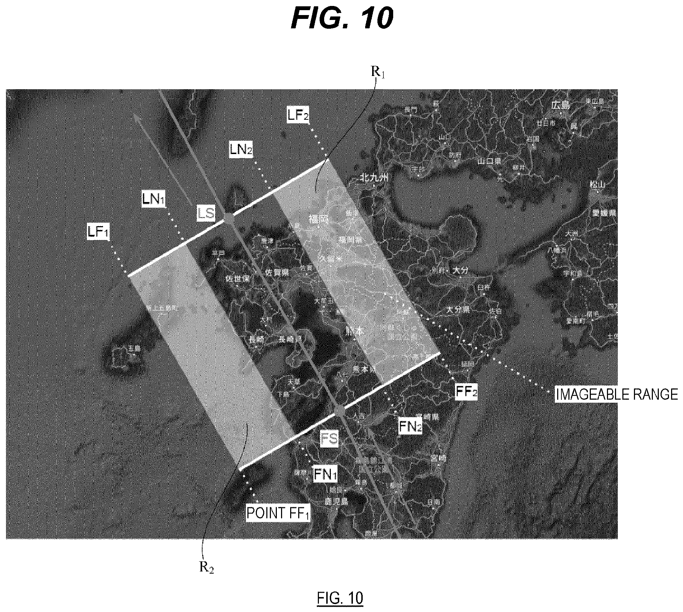

To calculate these points, first, the position (latitude and longitude) of the spacecraft 1 can be output on the map. Specifically, by plotting the position of the spacecraft 1 on the map at predetermined time intervals, the orbit of the spacecraft 1 can be represented on the map in association with the date and time (see Fig. 10).

As the time interval is shorter, a more detailed imageable range can be determined, but a required calculation amount can be larger. Therefore, it is preferable to set an appropriate time interval from the area represented on the map. In particular, since the spacecraft 1 at an altitude of about 500 km travels at a speed of about 7 to 8 km per second, the time interval is preferably about 1 second in a case where the area of, for example, about 30 km² is represented on the map. However, in a case where the area of, for example, about 1000 km² is represented on the map, setting the time interval to about 1 second increases the required calculation amount, which is not preferable.

When the point FS and the point LS at certain timing are determined using the time interval determined in this manner, a vector from the FS to the LS can be expressed on the map expressed by latitude and longitude. A normal vector can be calculated from this vector. By using the altitude of the spacecraft 1 and the incident angle θa or the incident angle θb, a length of the normal vector can be calculated from a trigonometric function. By calculating a direction and the length of the normal vector in this manner, FF₁, FN₁, LF₁, LN₁, FF₂, FN₂, LF₂, LN₂ can be calculated. As a result, a quadrangle R₁ with four corners FF₁, FN₁, LF₁, and LN₁, and a quadrangle R₂ with four corners FF₂, FN₂, LF₂, and LN₂ can be determined as the imageable ranges (see Figs. 9 and 10).

In this manner, the tasking system 5 can determine the imageable range by the spacecraft 1 on the map in association with the date and time (the range can be superimposed and displayed on the map). In a case where a plurality of the spacecrafts 1 is used, the tasking system 5 can determine, for each spacecraft 1, the imageable range by the spacecraft 1 on the map in association with the date and time (the range can be superimposed and displayed on the map).

As a result, the tasking system 5 can determine whether or not imaging by the spacecraft 1 based on the order condition received from the terminal device 4 is possible. Specifically, in a case where the order condition includes only the coordinates of the point to be imaged, the tasking system 5 can determine that the imaging by the spacecraft 1 based on the order condition is possible (or impossible) when the coordinates of the point are included (or not included) in the imageable range determined as described above. Meanwhile, in a case where the order condition includes the coordinates of the point to be imaged and the date and time to image the point, the tasking system 5 can determine that the imaging by the spacecraft 1 based on the order condition is possible (or impossible) when the coordinates of the point are included (or not included) in the imageable range by the spacecraft 1 corresponding to the date and time determined as described above.

Referring back to Fig. 7, in a case where the tasking system 5 determines that the imaging by the spacecraft 1 based on the order conditions is impossible in ST504, the tasking system 5 notifies the terminal device 4 of the determination in ST506, so that the terminal device 4 can display the information on the display unit (output device 16). Thereafter, the processing returns to ST500 described above. In this case, the user will review the order condition.

On the other hand, in a case where the tasking system 5 determines that the imaging by the spacecraft 1 based on the order condition is possible in ST504, the tasking system 5 can notify the terminal device 4 of at least one candidate condition including a candidate date and time at which (the coordinates of) the point included in the order condition can be imaged in order for the display unit (output device 16) of the terminal device 4 to display the information in ST508.

(Note that, although not illustrated, the tasking system 5 can also notify the terminal device 4 that the imaging by the spacecraft 1 based on the order conditions is possible before moving from ST504 to ST508.)

As described in connection with ST502, the tasking system 5 can determine the imageable range by each spacecraft 1 on the map in association with the date and time. Therefore, in the case where the order condition includes only the coordinates of the point to be imaged, the tasking system 5 can determine at least one date and time at which the point can be imaged by comparing the coordinates of the point with the imageable range determined in association with the date and time as described above.

Furthermore, in the case where the order condition includes the coordinates of the point to be imaged and the date and time to image the point, the tasking system 5 can determine at least one date and time at which the point can be imaged by comparing the coordinates of the point and the imaging date and time with the imageable range determined in association with the date and time as described above.

The tasking system 5 notifies the terminal device 4 of at least one candidate condition including the candidate date and time thus determined, so that the terminal device 4 can display such at least one candidate condition on the display unit (output device 16). In a case where there is a plurality of candidate conditions, the terminal device 4 can display the plurality of candidate conditions in a pull-down menu format, for example.

Next, in ST510, the terminal device 4 can cause the user to select any one candidate condition (as the selection condition) from among the displayed at least one candidate condition. By notifying the tasking system 5 of the selection condition, the terminal device 4 can order imaging based on the selection condition. This selection condition can include the coordinates of the point to be imaged (the coordinates of the point input by the user in ST510) in addition to the candidate condition (for example, the date and time to image the point to be imaged) selected by the user in ST500.

Note that, by registering customer information (user's name, address, telephone number, age and/or e-mail address, and the like) and contract content (a period during which the user receives provision of the observation service, consideration paid by the user to receive the provision of the observation service, and the like) in the tasking system 5 in advance, the user can perform such an order only with a smaller number of operations, for example, an operation of clicking an object of "order " once (one click). As a result, the user can execute ST500 to ST510 in several seconds to several minutes, for example, it is possible to promptly order the imaging even in a situation where a disaster such as an earthquake occurs.

Next, in ST512, the tasking system 5 can receive the candidate condition (selection condition) selected by the user from the terminal device 4, that is, can receive the order of imaging based on the selection condition. As a result, the tasking system 5 can specify the coordinates of the point to be imaged and the date and time to image the point.

Next, in ST514, the tasking system 5 can transmit the imaging request data requesting imaging of the point to be imaged to the management device 6. The imaging request data can include the position to be imaged data that specifies the point to be imaged and the imaging time data that specifies the date and time to image the point.

Next, in ST516, the management device 6 can determine the combination of the spacecraft 1 capable of executing the imaging ordered by the user and the ground station 2 equipped with the communication device 3 that transmits the control data to the spacecraft 1 (here, the ground station 2a equipped with the communication device 3a), as described in "7. Management Device 6" above. Furthermore, as described in "7. Management Device 6" above, the management device 6 can transmit the instruction signal (command signal) including the control data and the request signal to the determined ground station 2a.

Next, in ST518, the ground station 2a that has received the instruction signal can transmit the control data to the determined spacecraft 1 (here, the spacecraft 1a) using the communication device 3a mounted on the ground station 2a. As described in "4. Spacecraft 1" above, the control data can include, for example, the position to be imaged data (data indicating a certain point or region on the earth to be imaged), the imaging time data (data indicating the date and time when the imaging is to be executed), and the selection data (data indicating the operation pattern related to the imaging operation that can be executed by the spacecraft 1). As a result, in ST520, the spacecraft 1a can receive the control data from (the communication device 3a mounted on) the ground station 2a.

In ST520, further, the spacecraft 1a can execute the imaging of the point to be imaged at the predetermined date and time on the basis of the received control data. As a result, the spacecraft 1a can acquire the image data.

Here, as an example, the spacecraft 1 can include a specific component for registering a schedule related to at least one imaging to be executed. Each time the spacecraft 1 receives new control data, the spacecraft 1 can register a new schedule in this specific component. Further, the spacecraft 1 can exchange a certain schedule registered in the specific component with another schedule. Furthermore, the spacecraft 1 can also cancel at least one schedule registered in the specific component. Alternatively, the spacecraft 1 can preferentially receive and register a schedule related to imaging requested by the user with a high priority defined in a contract condition or the like. The spacecraft 1 can execute the imaging according to the schedule registered in the specific component in this manner. Each schedule may include information regarding the point to be imaged and the date and time to image the point.

Next, in ST522, the spacecraft 1a can transmit (downlink) the acquired image data to, for example, the ground station 2. Note that Fig. 7 illustrates an example in which the spacecraft 1a transmits the acquired image data to the ground station 2a that has transmitted the control data to the spacecraft 1a. However, the spacecraft 1a can also transmit the image data to another ground station 2.

Further, Fig. 7 illustrates an example in which the spacecraft 1a transmits the image data to the ground station 2. However, in a case where the spacecraft 1a includes an image generation device that generates an image on the basis of image data, it is also possible to transmit an image generated using the image generation device to the ground station 2 (not limited to the ground station 2a). In this case, the image can be transmitted to the terminal device 4 of the user via the ground station 2, the management device 6, the image data reception device 7 and/or the image generation device 8, and the tasking system 5.

Next, in ST524, the ground station 2a that has received the image data can transmit the image data to the image data reception device 7. In one example, the image data reception device 7 can transmit the image data to the image generation device 8. The image generation device 8 can generate the image on the basis of the received image data and transmit the image to the tasking system 5.

Note that the image generation device 8 generally requires a lot of time to generate an image having a high resolution. To generate an image more quickly, in a first example, the image generation device 8 can generate an image that cover some areas desired by the user instead of generating an image of a wide range.

To generate an image more quickly, in a second example, the image generation device 8 can generate an image having optimized image quality in a case of generating an image of a wide range. Specifically, the image generation device 8 can generate an image using a lower resolution of 5 m, for example, instead of the highest resolution of 70 cm, for example.

Next, in ST526, the tasking system 5 can transmit the received image to the terminal device 4 of the user. Accordingly, in ST528, the terminal device 4 of the user can display the image received from the tasking system 5.

Note that, although not illustrated in Fig. 7, in a case where the user desires not an image but image data that is a source of the image, or the like, in ST524, the ground station 2a can also transmit the image data to the tasking system 5 via the management device 6 or directly. In particular, in a case where the observation system 10 uses the spacecraft 1 equipped with a synthetic aperture radar (SAR), the tasking system 5, the terminal device 4 of the user, another processing device, or the like processes the image data of the same point, thereby detecting a minute change in the earth due to, for example, a flood, a ground sinking, or the like. Therefore, it can also be important for the ground station 2a to transmit the image data itself to the terminal device 4 of the user more quickly.

### 10. Modification

### (1) Display of Imageable Range

It is preferable that the user can request (order) the tasking system 5 to perform more imaging in a short time. The point here is how to exclude the user from inputting such an order condition that imaging is not possible. If the user who does not have knowledge about the spacecraft can intuitively recognize whether or not imaging based on the order condition input by the user is possible in the aspect of inputting the order condition to the tasking system 5, for example, it is possible to refrain from inputting unnecessary order conditions, and thus, it is possible to request more imaging in a short time.

To make it possible for the user to intuitively recognize whether or not imaging based on the order condition input by the user is possible, the terminal device 4 of the user can sequentially display the imageable range by the spacecraft 1 at regular time intervals, which is used in the observation system 10.

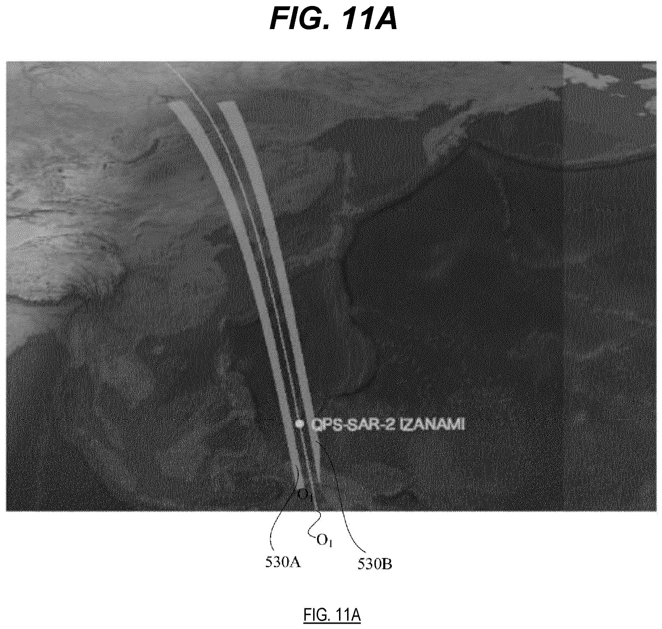

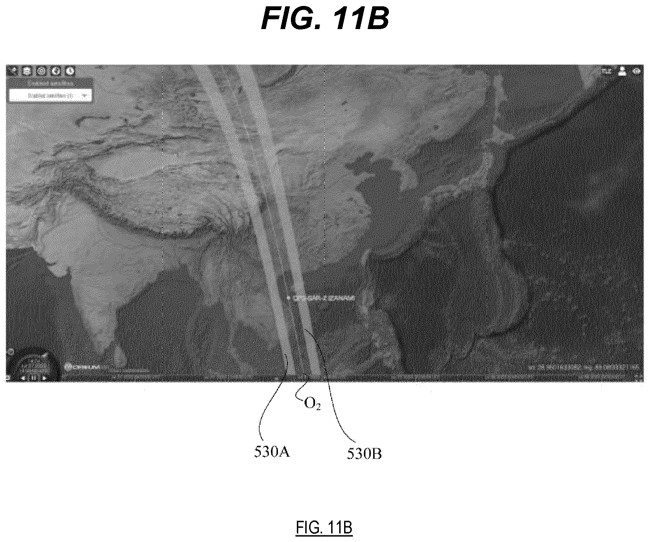

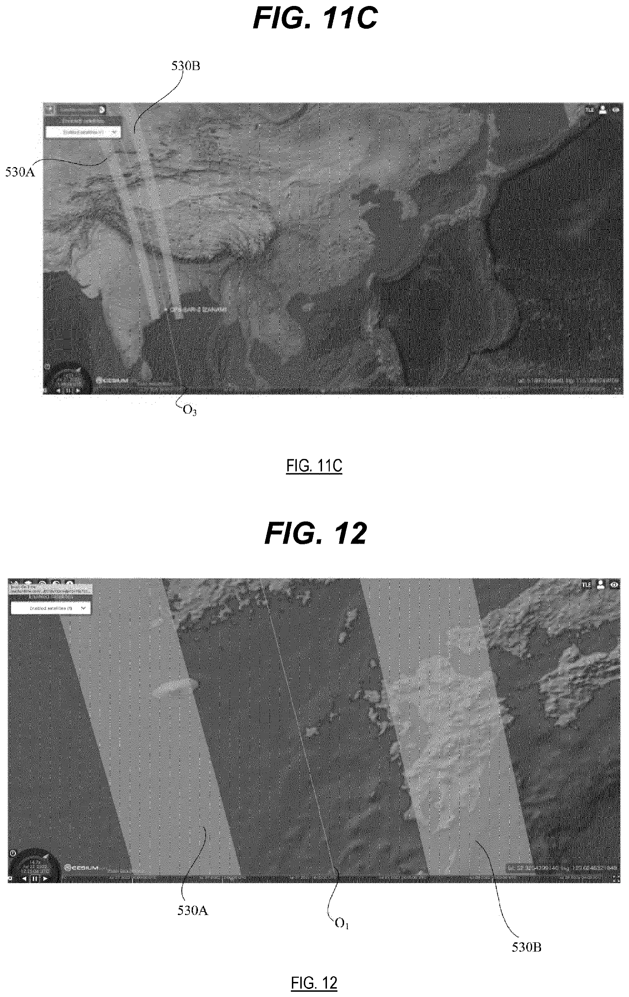

For example, consider a case where the user wants to image Fukuoka city (see Fig. 10 previously used for the position of Fukuoka city). The spacecraft 1 does not always move along the same orbit with respect to the earth. For example, as illustrated in each of Figs. 11A to 11C, the spacecraft 1 can move along a plurality of orbits with respect to the earth. In a case where the spacecraft 1 moves along an orbit O₁ illustrated in Fig. 11A, the spacecraft 1 passes over Fukuoka city and thus can image Fukuoka city, whereas in a case where the spacecraft 1 moves along an orbit O₂ and an orbit O₃ illustrated in Figs. 11B and 11C, the spacecraft 1 does not pass over Fukuoka city and thus cannot image Fukuoka city.

Therefore, as illustrated in Figs. 11A to 11C, the terminal device 4 of the user can display, on the display unit, a screen in which regions 530 imageable by the spacecraft 1, that is, regions 530A and 530B extending in a band shape on both sides of the orbit O, are visualized (illustrated) on the map. Furthermore, the terminal device 4 of the user can also display, for example, an enlarged part of the map illustrated in Fig. 11A as illustrated in Fig. 12.

As described above, the terminal device 4 presents (displays), to the user, the screen in which the regions 530 imageable by the spacecraft 1 are visualized on the map, so that the user can intuitively determine whether or not the point desired by the user falls within the imageable range by the spacecraft 1.

Note that the orbit O of the spacecraft 1 and the imageable range extending in the band shape on both sides of the orbit O illustrated in Figs. 11A to 11C and 12 can be calculated by the tasking system 5, as described in relation to ST502 in "9. Operation Executed by Observation System 10" above. Therefore, the tasking system 5 transmits map data and data related to the orbit O and the imageable range calculated in association with the map data to the terminal device 4, so that the terminal device 4 can display the screens illustrated in Figs. 11A to 11C and 12.

Furthermore, in one example, the imageable range by the spacecraft 1 can be determined by the coordinates on the map.

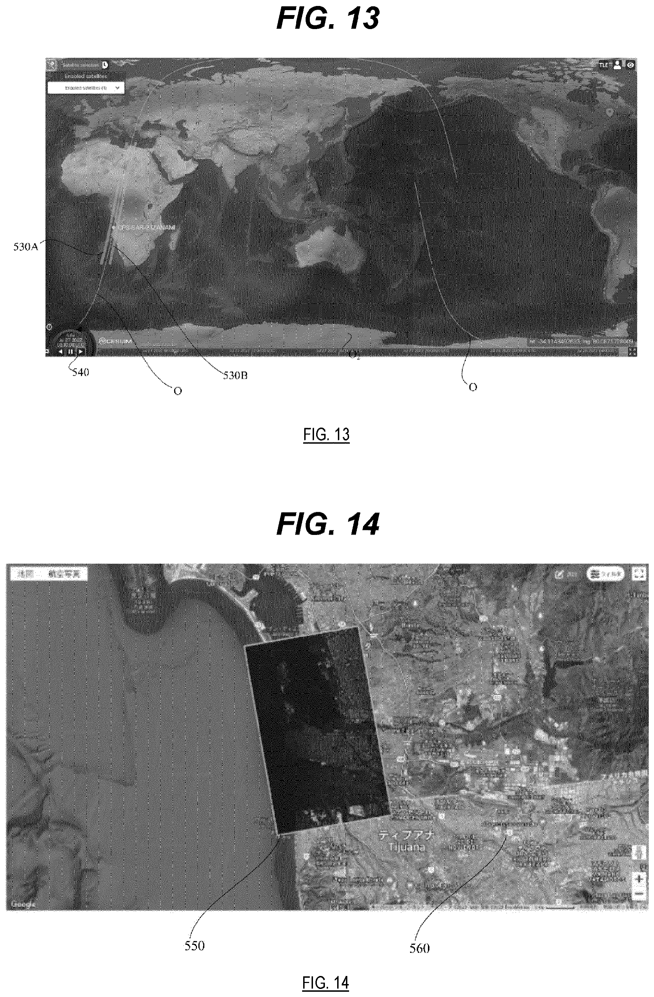

In another example, the imageable range by the spacecraft 1 can be determined by the coordinates on the map and the date and time. As a result, as illustrated in Fig. 13, the terminal device 4 can display a time change interface 540 such as a time bar or a time window in combination with the map. The user operates the time change interface 540, so that the terminal device 4 can superimpose and display the ranges 530A and 530B on the map, which are imageable by the spacecraft 1 and correspond to the date and time set by such an operation so as to be superimposed on the map. That is, when the user operates the time change interface 540 to set the first date and time, the terminal device 4 can superimpose and display the imageable ranges at the first date and time (the ranges extending in the band shape on both sides of the orbit O along the orbit O) on the map, and when the user operates the time change interface 540 to set a certain second date and time, the terminal device 4 can superimpose and display the imageable ranges at the second date and time (the ranges extending in the band shape on both sides of the orbit O along the orbit O) on the map. Note that, in a case where the first date and time and the second date and time are close in time, the imageable ranges at the first date and time and the imageable ranges at the second date and time may partially overlap, whereas in a case where the first date and time and the second date and time are far apart in time, the imageable ranges at the first date and time and the imageable ranges at the second date and time will not overlap.

As a result, the user can grasp the movement of the spacecraft 1 in accordance with the desired time for imaging. Therefore, the user can determine whether or not the appropriate spacecraft 1 can observe (image) the point to be imaged in a necessary time zone.

Note that, in view of the fact that the information required by the user is not information regarding the orbit O of the spacecraft 1 but information regarding the imageable range in many cases, it is also possible to omit display of the orbit O of the spacecraft 1 when superimposing and displaying the imageable ranges on the map on the screen illustrated in Figs. 11A to 11C, 12, and 13. As a result, since the amount of information to be displayed can be suppressed, the terminal device 4 can more smoothly and quickly superimpose and display the imageable ranges on the map. For example, in an aspect in which imaging executed by a plurality of spacecrafts 1 in cooperation (imaging by constellation) is available, there is a possibility that the displayed orbits O of the plurality of spacecrafts 1 become an obstacle for the user. Therefore, in the aspect in which imaging by constellation is available, such a configuration that omits display of the orbit O of the spacecraft 1 can be particularly effective.

In still another example, in ST500 (see Fig. 7), when the user inputs the coordinates of the point to be imaged, the screens illustrated in Figs. 11A to 11C, 12, and 13 can also be used. That is, in ST500, the terminal device 4 can cause the user to designate the point to be imaged on the map illustrated in Figs. 11A to 11C, 12, and 13 using a mouse or the like. Thereby, the user can determine the point to be imaged by operating the mouse or the like and clicking a pointer or the like on the map in accordance with the imageable range. Therefore, it is possible to effectively exclude the user from inputting the order condition in which imaging is not possible.

### (2) Storage, Display, etc. of Image and/or Image Data

The image and/or image data acquired by the observation system 10 described with reference to Fig. 7 can be stored in the tasking system 5 and/or the terminal device 4. The reason why the image data can be stored is that, as a feature of the synthetic aperture radar, there is an advantage that a minute change can be detected by superimposing two pieces of image data acquired by imaging performed at a certain point on a plurality of different dates and times and identifying or displaying only a difference between the two pieces of image data. For example, by using a method of identifying or displaying a difference between a plurality of pieces of image data in this manner, it is possible to grasp a situation of ground sinking or a construction situation or the like of a large facility such as a building or a dam in units of several cm. By grasping such a situation of ground sinking, a construction situation of a large facility, or the like in advance, it can be expected to prevent an accident by any chance.

The acquired or stored image data can be transmitted from the tasking system 5 to the terminal device 4 as it is, but is not limited thereto. For example, not only the acquired or stored image data but also a map or a photograph related to the image data can be transmitted from the tasking system 5 to the terminal device 4 at the same timing or at different timings. Then, the terminal device 4 can display the image data and the map or the photograph related to the image data in combination. For example, as illustrated in Fig. 14, the terminal device 4 can display a screen in which a part 550 in the same map is expressed by the image data and a remaining part 560 in the same map is expressed by the map or the photograph.

### (3) Modification of Observation System 10

A case where the ground station 2 transmits the control data (imaging command) to the spacecraft 1 has been described with respect to the example related to Fig. 1 and the like. However, this is merely one example, and other configurations can be adopted.

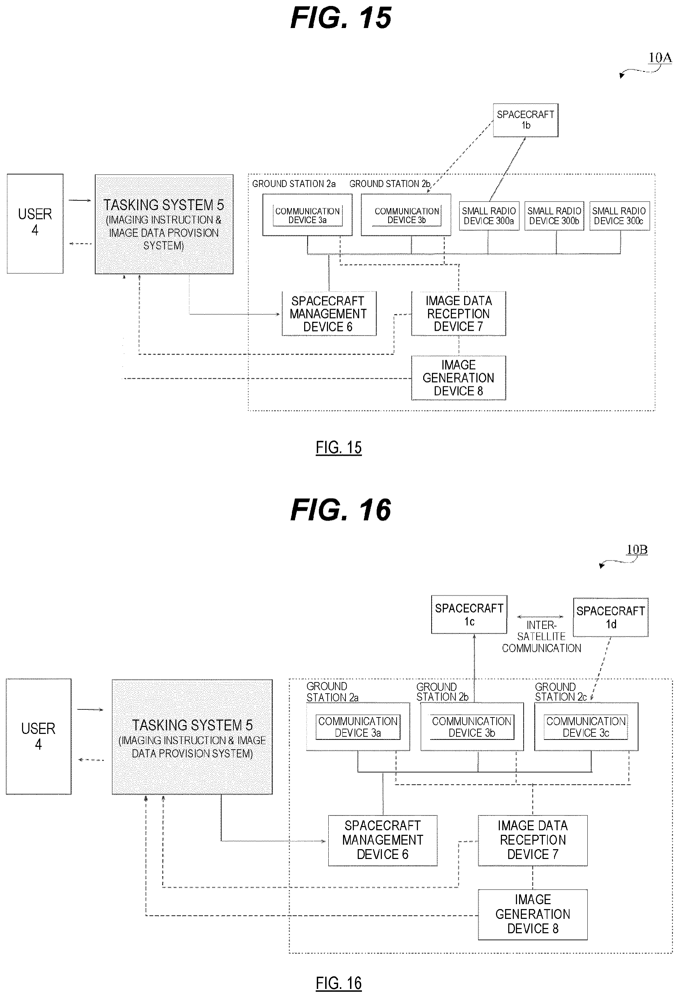

In an observation system 10A illustrated in Fig. 15, instead of the configuration of transmitting the instruction signal (command signal) including the control data and the request signal to the ground station 2, the management device 6 can transmit the instruction signal (command signal) including the control data and the request signal to any small radio device 300 among a plurality of small radio devices 300. Note that each small radio device 300 can be a device provided for the purpose of transmitting the control data to the spacecraft 1 (in contrast, the ground station 2 can transmit and receive data to and from the spacecraft 1).

The small radio device 300 (here, a small radio device 300a as an example) that has received such an instruction signal can transmit the control data to any one of the spacecrafts 1 (here, the spacecraft 1b as an example). Upon receiving the control data, the spacecraft 1b can acquire the image data by performing imaging on the basis of the control data.

In one example, the spacecraft 1b can transmit the acquired image data to the ground station 2 (here, the ground station 2b as an example).

In another example, the spacecraft 1b can generate an image from acquired the image data using an image generation device mounted on the spacecraft 1b. In this case, the spacecraft 1b can generate the image on the basis of the acquired image data during a period from a time point of acquiring the image data to when reaching a position where communication with the ground station 2b is possible. After reaching the position where communication with the ground station 2b is possible, the spacecraft 1b can transmit the generated image to the ground station 2b at appropriate timing. By adopting this configuration, the observation system 10A can generate an image more quickly and transmit the image to the terminal device 4 of the user.

Further, it is also possible to adopt the configuration illustrated in Fig. 16. In an observation system 10B illustrated in Fig. 16, the management device 6 can transmit the instruction signal (command signal) including the control data and the request signal to the ground station 2 (here, the ground station 2b as an example). The ground station 2b can transmit the control data to the spacecraft 1 (here, the spacecraft 1c as an example).

Here, as a first method, the spacecraft 1c that has received the control data can acquire the image data by executing imaging on the basis of the control data. The spacecraft 1c can transmit the image data or the image generated on the basis of the image data (by the spacecraft 1c) to the spacecraft 1d using inter-satellite communication. The spacecraft 1d can transmit the received image data or image to the ground station 2c.

According to the first method, even in a situation where the spacecraft 1c determined by the management device 6 as the most appropriate spacecraft among the plurality of spacecrafts 1 cannot transmit the image data or the image to the ground station 2 after executing imaging, the spacecraft 1c can transmit the image data or the image to the spacecraft 1d using inter-satellite communication.

Meanwhile, as a second method, the spacecraft 1c that has received the control data can transmit the control data to the spacecraft 1d using inter-satellite communication. Upon receiving the control data, the spacecraft 1d can acquire the image data by performing imaging on the basis of the control data. The spacecraft 1d can transmit the image data or the image generated on the basis of the image data (by the spacecraft 1d) to the ground station 2c.

According to the second method, even in a situation where the spacecraft 1d determined by the management device 6 as the most appropriate spacecraft among the plurality of spacecrafts 1 cannot receive the control data from the ground station 2, the spacecraft 1d can execute imaging based on the control data by receiving the control data from the spacecraft 1c using inter-satellite communication.

### (4) Display of Status

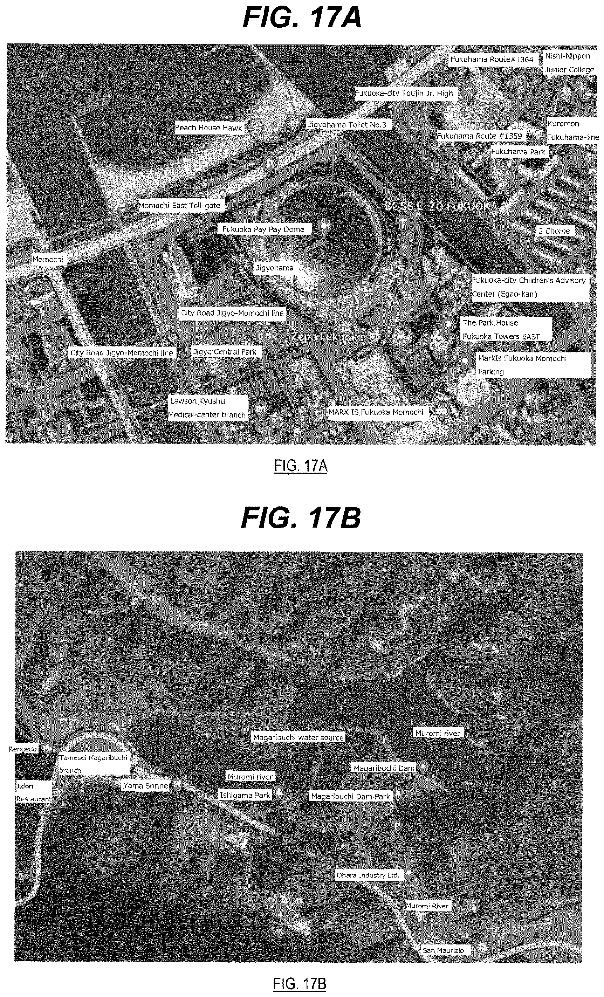

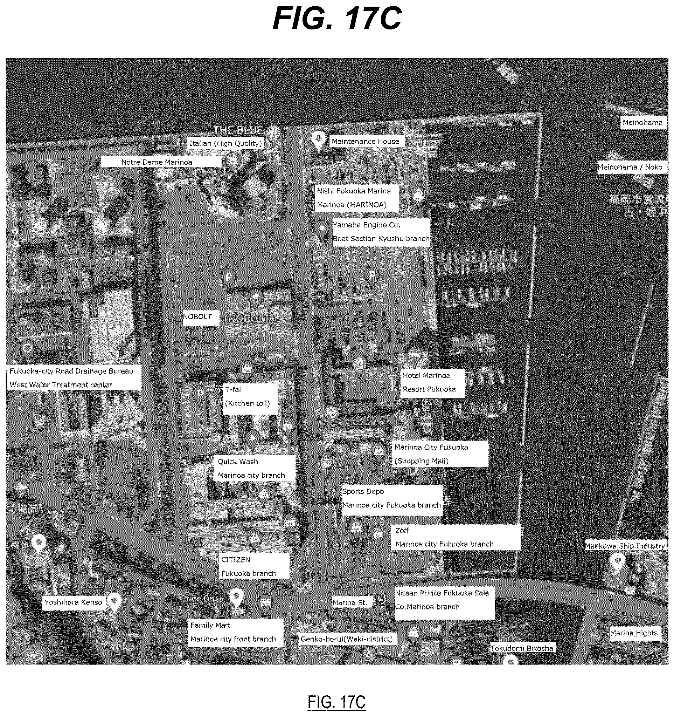

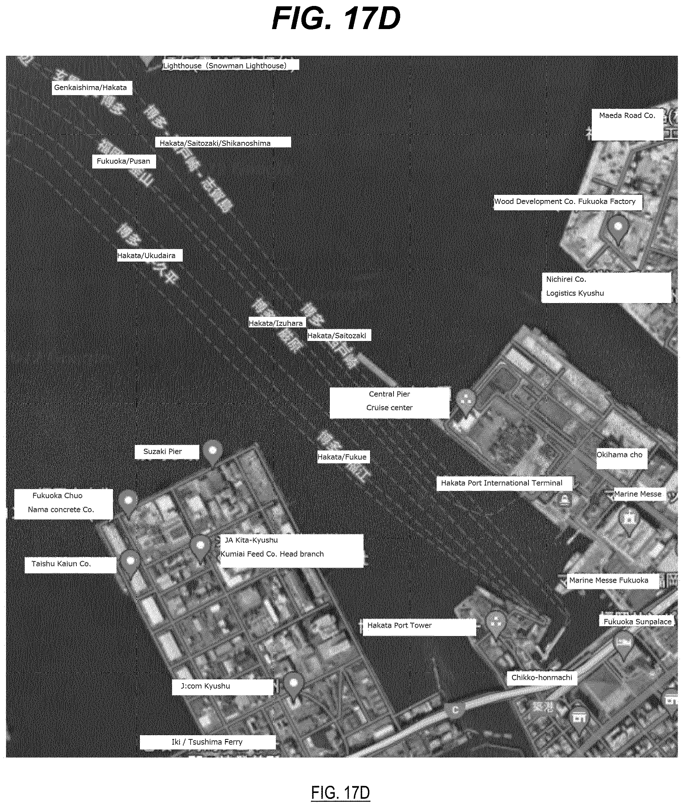

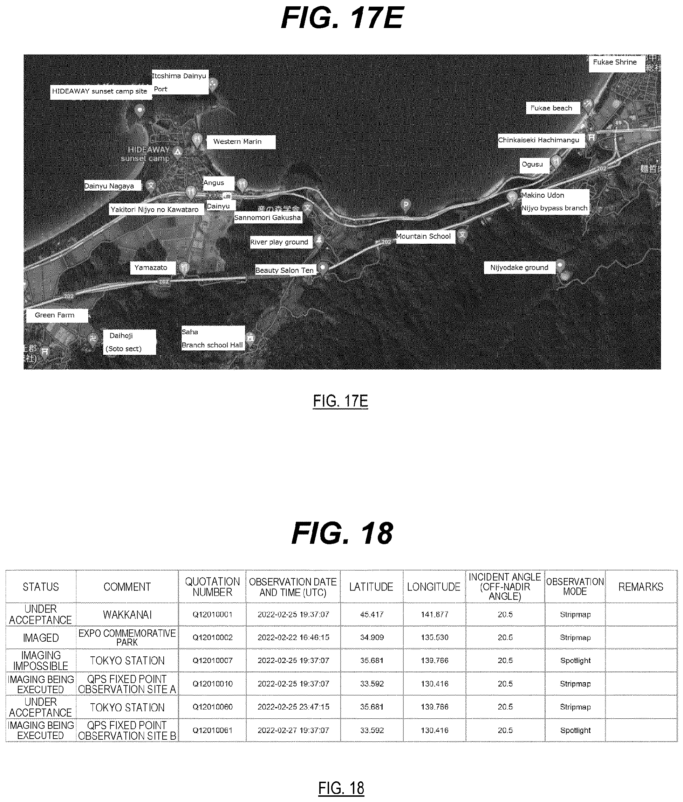

The information observed by the technology disclosed in the present application is useful for people's life in many situations. As a first example, as illustrated in Fig. 17A, according to the image (or image data) acquired by the observation system disclosed in the present application, it is possible to grasp a congestion situation around a commercial facility (for example, Yahoo dome). As a second example, as illustrated in Fig. 17B, according to the image (or image data) acquired by the observation system disclosed in the present application, it is possible to grasp a change in an amount of water stored in a dam. As a third example, as illustrated in Fig. 17C, according to the image (or image data) acquired by the observation system disclosed in the present application, it is possible to grasp an availability of a parking lot. As a fourth example, as illustrated in Fig. 17D, according to the image (or image data) acquired by the observation system disclosed in the present application, it is possible to grasp an operation status of a ship in a fishing port and/or to select an optimum route. As a fifth example, as illustrated in Fig. 17E, according to the image (or image data) acquired by the observation system disclosed in the present application, it is possible to grasp a situation of a coastal area and/or a mountainous land area at the time of natural disaster including heavy rain, an earthquake, or the like. In particular, in the case where the spacecraft mounts and uses the synthetic aperture radar, there may be a very large advantage that the point to be imaged can be observed (imaged) even under bad weather and/or at night as compared with a case where the spacecraft mounts and uses an optical camera.

To more effectively and/or efficiently use such information, it is preferable that the observation system transmit the instruction signal (command signal) to the ground station 2 for an observation point desired by the user earlier, that is, transmit the control data to the spacecraft 1, and provide the user with the image data acquired by the spacecraft and/or the image generated on the basis of the image data earlier. Furthermore, there may a case where the observation system cancels any one of the imaging requests when temporarily receiving a plurality of imaging requests from a certain user, and in this case, it is preferable that the next imaging request from the user can be smoothly received.

Therefore, the observation system can adopt a configuration in which the terminal device 4 of the user displays a status of each imaging request made by the user so far. For example, the terminal device 4 of the user can select and display the status of each imaging request made by the user so far from among a plurality of the statuses. As illustrated in Fig. 18, the plurality of statuses can include, but is not limited to, "under acceptance", "imaging impossible", "imaging possible", "imaging being executed", and/or "imaged", and the like.

Fig. 19 is a flowchart illustrating each status displayed by the terminal device 4. As illustrated in Fig. 19, the status "under acceptance" can be displayed on the terminal device 4, for example, in a period from when the terminal device 4 of the user transmits then order condition (ST600) to when the tasking system 5 determines whether imaging based on the order condition is possible (ST602) .

The status "imaging impossible" can be displayed on the terminal device 4, for example, in a period of or after a time point (ST602) when the tasking system 5 determines that imaging based on the order condition is impossible.

The status "imaging possible" can be displayed on the terminal device 4, for example, in a period from a time point (ST602) when the tasking system 5 determines that the imaging based on the order condition is possible to a time point (ST606) when the terminal device 4 of the user selects one of the at least one candidate condition as the selection condition.

The status "imaging being executed" can be displayed on the terminal device 4, for example, in a period from a time point (ST608) when the terminal device 4 transmits the selection condition to the tasking system 5 to a time point (ST620) when the spacecraft 1 receives the control data via the tasking system 5, the management device 6, and the ground station 2 (communication device 3) and registers the imaging based on the control data as a schedule until before the imaging is executed (ST622).

The status "imaged" can be displayed on the terminal device 4 in a period of or after a time point when the terminal device 4 receives the image data or the image acquired by the imaging as a result of executing the imaging by the spacecraft 1 (ST622), for example.

Furthermore, in one example, even the imaging request that has been received by the tasking system 5 and is in the "imaging being executed" status may be canceled by the tasking system 5 for some reason. In this case, as for the imaging request canceled in such a manner, the terminal device 4 can display the status of "imaging impossible" instead of the status of "imaging being executed".

To enable display of such a status, the tasking system 5 can determine which status the imaging request corresponding to the order condition corresponds to among the above-described plurality of statuses on the basis of the information transmitted to the terminal device 4 of the user and the information received from the terminal device 4 after the time point (ST602) when the order condition is received from the terminal device 4, and can transmit a result of the determination to the terminal device 4. Instead of this configuration, the terminal device 4 can estimate which status of the above-described plurality of statuses the imaging request corresponding to the order condition corresponds to on the basis of the information transmitted to the tasking system 5 and the information received from the tasking system 5 at or after the time point (ST600) when the terminal device 4 transmits the order condition, and display the status estimated as described above.

As described above, the terminal device 4 of the user displays the status of each imaging request made by the user, for example, so that the user can quickly grasp the fact when the imaging corresponding to any imaging request becomes impossible. As a result, the user can quickly transmit a new imaging request (order condition) by changing the point to be imaged (further, the date and time of imaging the point). Therefore, the user can more effectively and efficiently utilize the information provided by the observation system.

### (5) Priority of Imaging Request

The observation system basically prioritizes a previously received imaging request, but can prioritize a subsequently received imaging request instead of the previously received imaging request in an emergency such as natural disaster and/or according to a contract or a fee plan concluded with each user, for example.

As illustrated in Fig. 20, the period until time T2 is a normal period. In this normal period, in a case where a user A and a user B transmit the plurality of imaging requests that conflict with each other, the tasking system 5 can give priority to the imaging request previously transmitted by the user A.

Here, the plurality of imaging requests conflicting with each other can be, broadly speaking, a plurality of imaging requests in which the spacecraft 1 included in the observation system cannot execute imaging based on one imaging request and imaging based on the other imaging request.

For example, refer to Fig. 10 used above. The spacecraft 1 needs to tilt the posture of the spacecraft 1 in a certain direction when imaging an imageable region R₁, and needs to tilt the posture of the spacecraft 1 in another direction when imaging an imageable region R₂. Therefore, the spacecraft 1 cannot simultaneously image the region R₁ and the region R₂. Therefore, the imaging request for imaging the point included in the region R₁ at a certain date and time and the imaging request for imaging the point included in the region R₂ at the same date and time can correspond to the plurality of imaging requests conflicting with each other.

Returning to Fig. 20, the period from time T2 to time T4 is, for example, an emergency period. During this emergency period, the imaging request that needs to be urgently executed due to a natural disaster or the like can be prioritized. For example, in a case where the user B transmits the imaging request that needs to be executed urgently, the tasking system 5 can give priority to the imaging request of the user B even if the imaging request transmitted by the user B conflicts with the imaging request of the user A accepted earlier. In this case, at time T4, the tasking system 5 can transmit information indicating that the imaging request transmitted by the user A has been canceled (an imaging error has occurred) to the terminal device 4 of the user A. In this case, the terminal device 4 of the user A can also display the status of the imaging request previously transmitted by the user A as "imaging impossible" (see Fig. 18).

Furthermore, the tasking system 5 or an operator of the tasking system 5 can transmit the imaging request data based on the imaging request of the user B to the management device 6 within a predetermined period (for example, a period during which the control data for the spacecraft 1 can be transmitted, that is, a period up to time T5), the management device 6 can transmit the instruction signal (command signal) to the ground station 2, and (the communication device 3 mounted on) the ground station 2 can transmit the control data to the spacecraft 1. As a result, the spacecraft 1 executes the imaging at time T6 to acquire the image data, any device (this spacecraft 1, another spacecraft 1, the image generation device 8, or the tasking system 5) generates the image on the basis of the image data at time T7, and the tasking system 5 can transmit the image to the terminal device 4 of the user B at time T8.

In another example, even in a case where the imaging request is transmitted and received by a certain user earlier in the normal period, the tasking system 5 can prioritize a subsequent imaging request that conflicts with the imaging request of the certain user, the subsequent imaging request transmitted by another user who, for example, has concluded a contract with a higher price plan and/or has concluded a special contract.

### (6) Others

For example, in a case where a powerful processor is mounted, other cases, or the like, the terminal device 4 can execute some processing among the above-described various types of processing executed by the tasking system 5 instead of the tasking system 5. Some processing referred to here can include, but is not limited to, for example, some of the pieces of processing described above as being executed by the tasking system 5 in ST502, ST504, and/or ST508.

### 11. Various Aspects

A processing device according to the first aspect can adopt a configuration of "a processing device including at least one processor used in connection with a spacecraft that images the earth, and the at least one processor is configured to: from a terminal device of a user, receive an order condition including coordinates of a point to be imaged or the coordinates and a date and time to image the point; transmit a determination result indicating whether or not the imaging by the spacecraft based on the order condition is possible to the terminal device of the user; and transmit at least one candidate condition including a candidate date and time when the imaging of the point is possible to the terminal device of the user in a case where the determination result indicates that the imaging by the spacecraft based on the order condition is possible".

The processing device according to the second aspect can adopt, in the above-described first aspect, a configuration in which "the at least one processor is configured to: receive, from the terminal device of the user, a selection condition selected from the at least one candidate condition; and transmit image data acquired by the spacecraft on a basis of the selection condition or an image generated on a basis of the image data to the terminal device of the user".

The processing device according to the third aspect can adopt, in the above-described first aspect or the above-described second aspect, a configuration in which "the at least one processor is configured to: display, on the terminal device of the user, a screen in which an imageable range by the spacecraft is visualized on a map by transmitting information including the map and the imageable range on the map".

The processing device according to the fourth aspect can adopt, in the above-described third aspect, a configuration in which "the imageable range by the spacecraft is determined using the coordinates or using the coordinates and the date and time".

A computer program according to the fifth aspect can adopt a configuration to "cause at least one processor to function to, by being executed by the at least one processor mounted in a processing device used in connection with a spacecraft that images the earth: from a terminal device of a user, receive an order condition including coordinates of a point to be imaged or the coordinates and a date and time to image the point; transmit a determination result indicating whether or not the imaging by the spacecraft based on the order condition is possible to the terminal device of the user; and transmit at least one candidate condition including a candidate date and time when the imaging of the point is possible to the terminal device of the user in a case where the determination result indicates that the imaging by the spacecraft based on the order condition is possible".

A computer program according to the sixth aspect can adopt a configuration to "cause at least one processor to function to, by being executed by the at least one processor mounted in a terminal device of a user: transmit an order condition including coordinates of a point to be imaged or the coordinates and a date and time to image the point to a processing device used in connection with a spacecraft that images the earth; receive, from the processing device, a determination result indicating whether or not the imaging by the spacecraft based on the order condition is possible; and receive, from the processing device, at least one candidate condition including a candidate date and time when the imaging of the point is possible in a case where the determination result indicates that the imaging by the spacecraft based on the order condition is possible".

The computer program according to the seventh aspect can adopt, in the above-described sixth aspect, a configuration to "cause the at least one processor to function to: transmit, to the processing device, a selection condition selected by the user from the at least one candidate condition; and receive, from the processing device, image data acquired by the spacecraft on a basis of the selection condition or an image generated on a basis of the image data".

The computer program according to the eighth aspect can adopt, in the above-described sixth aspect or the above-described seventh aspect, a configuration to "cause the at least one processor to function to: display, on a display unit, a screen in which an imageable range by the spacecraft is visualized on a map".

The computer program according to the ninth aspect can adopt, in the above-described eighth aspect, a configuration in which "the imageable range by the spacecraft is determined using the coordinates or using the coordinates and the date and time".

The computer program according to the tenth aspect can adopt, in the above-described eighth aspect, a configuration to "cause the at least one processor to function to: cause the user to designate the coordinates of the point to be imaged on the map included on the screen".

The computer program according to the eleventh aspect can adopt, in the above-described sixth aspect or the above-described seventh aspect, a configuration in which "the at least one candidate condition includes a plurality of candidate conditions" and the configuration to "cause the at least one processor to function to: cause the user to select one of the plurality of candidate conditions as a selection condition by displaying the plurality of candidate conditions on a display unit, and transmit the selection condition to the processing device".

As will be readily understood by one of ordinary skill in the art having the benefit of this disclosure, the above-described various examples may be used in appropriate combination in various patterns relative to one another as long as no contradiction arises.

In view of the many possible embodiments to which the principles of the invention disclosed in the present specification can be applied, it is to be understood that the various illustrated embodiments are only various preferred examples and should not be considered as limiting the technical scope of the invention according to the claims to these various preferred examples. Actually, the technical scope of the invention according to the claims is defined by the appended claims. Accordingly, a patent is claimed as the invention of the present inventors for all the inventions belonging to the technical scope of the invention described in the claims.

As described above, according to the technology disclosed in the present application, it is possible to provide a processing device and a computer program that more smoothly provide an image or image data to a user who desires imaging by a spacecraft.

### Reference Signs List

- 10: Observation system
- 1, 1a, 1b: Spacecraft
- 2, 2a, 2b: Ground station
- 3, 3a, 3b: Communication device
- 4: Terminal device of user
- 5: Tasking system
- 6: Spacecraft management device
- 7: Image data reception device
- 8: Image generation device

## Claims

1. A processing device comprising at least one processor used in connection with a spacecraft that images the earth, wherein
the at least one processor is configured to:
from a terminal device of a user,
receive an order condition including coordinates of a point to be imaged or the coordinates and a date and time to image the point;
transmit a determination result indicating whether or not the imaging by the spacecraft based on the order condition is possible to the terminal device of the user; and
transmit at least one candidate condition including a candidate date and time when the imaging of the point is possible to the terminal device of the user in a case where the determination result indicates that the imaging by the spacecraft based on the order condition is possible.

2. The processing device according to claim 1, wherein the at least one processor is configured to:
receive, from the terminal device of the user, a selection condition selected from the at least one candidate condition; and
transmit image data acquired by the spacecraft on a basis of the selection condition or an image generated on a basis of the image data to the terminal device of the user.

3. The processing device according to claim 1 or 2, wherein
the at least one processor is configured to:
display, on the terminal device of the user, a screen in which an imageable range by the spacecraft is visualized on a map by transmitting information including the map and the imageable range on the map.

4. The processing device according to claim 3, wherein the imageable range by the spacecraft is determined using the coordinates or using the coordinates and the date and time.

5. A computer program for causing at least one processor to function to, by being executed by the at least one processor mounted in a processing device used in connection with a spacecraft that images the earth:
from a terminal device of a user, receive an order condition including coordinates of a point to be imaged or the coordinates and a date and time to image the point;
transmit a determination result indicating whether or not the imaging by the spacecraft based on the order condition is possible to the terminal device of the user; and
transmit at least one candidate condition including a candidate date and time when the imaging of the point is possible to the terminal device of the user in a case where the determination result indicates that the imaging by the spacecraft based on the order condition is possible.

6. A computer program for causing at least one processor to function to, by being executed by the at least one processor mounted in a terminal device of a user:
transmit an order condition including coordinates of a point to be imaged or the coordinates and a date and time to image the point to a processing device used in connection with a spacecraft that images the earth;
receive, from the processing device, a determination result indicating whether or not the imaging by the spacecraft based on the order condition is possible; and
receive, from the processing device, at least one candidate condition including a candidate date and time when the imaging of the point is possible in a case where the determination result indicates that the imaging by the spacecraft based on the order condition is possible.

7. The computer program according to claim 6, for causing the at least one processor to function to:
transmit, to the processing device, a selection condition selected by the user from the at least one candidate condition; and
receive, from the processing device, image data acquired by the spacecraft on a basis of the selection condition or an image generated on a basis of the image data.

8. The computer program according to claim 6 or 7, for causing the at least one processor to function to: display, on a display unit, a screen in which an imageable range by the spacecraft is visualized on a map.

9. The computer program according to claim 8, wherein the imageable range by the spacecraft is determined using the coordinates or using the coordinates and the date and time.

10. The computer program according to claim 8, for causing the at least one processor to function to: cause the user to designate the coordinates of the point to be imaged on the map included on the screen.

11. The computer program according to claim 6 or 7, wherein
the at least one candidate condition includes a plurality of candidate conditions, and
the computer program for causing the at least one processor to function to:
cause the user to select one of the plurality of candidate conditions as a selection condition by displaying the plurality of candidate conditions on a display unit; and
transmit the selection condition to the processing device.
